(19) Europäisches Patentamt
European Patent Office
Office européen des brevets

(11) **EP 2 195 235 B1**

(12) **EUROPÄISCHE PATENTSCHRIFT**

(45) Veröffentlichungstag und Bekanntmachung des Hinweises auf die Patenterteilung:
**15.04.2015 Patentblatt 2015/16**

(21) Anmeldenummer: **08802554.9**

(22) Anmeldetag: **24.09.2008**

(51) Int Cl.:
*B64C 9/16* (2006.01)     *B64C 9/22* (2006.01)
*B64C 13/16* (2006.01)     *G05D 1/00* (2006.01)

(86) Internationale Anmeldenummer:
**PCT/EP2008/008075**

(87) Internationale Veröffentlichungsnummer:
**WO 2009/040102 (02.04.2009 Gazette 2009/14)**

(54) **AUTOMATISCHE STEUERUNG EINES HOCHAUFTRIEBSSYSTEMS EINES FLUGZEUGS**

AUTOMATIC CONTROL OF A HIGH LIFT SYSTEM OF AN AIRCRAFT

COMMANDE AUTOMATIQUE DU SYSTÈME D'HYPERSUSTENTATION D'UN AVION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.09.2007 DE 102007045547**

(43) Veröffentlichungstag der Anmeldung:
**16.06.2010 Patentblatt 2010/24**

(73) Patentinhaber: **Airbus Operations GmbH**
**21129 Hamburg (DE)**

(72) Erfinder:
• **BERENS, Martin**
**28201 Bremen (DE)**
• **QUELL, Jürgen**
**21077 Hamburg (DE)**
• **KRÖGER, August**
**25488 Holm (DE)**

(74) Vertreter: **UEXKÜLL & STOLBERG**
**Patentanwälte**
**Beselerstrasse 4**
**22607 Hamburg (DE)**

(56) Entgegenhaltungen:
EP-A- 1 498 794     FR-A- 2 817 535
US-A- 4 106 730     US-A1- 2006 049 308
US-A1- 2007 057 114

**Beschreibung**

Die Erfindung betrifft eine Einrichtung zur automatischen Steuerung eines Hochauftriebssystems eines Flugzeugs nach dem Oberbegriff des Anspruchs 1.

Es ist eine Vielzahl von Hochauftriebssystemen bekannt, welche zur Erhöhung des Maximalauftriebs am Tragflügel von Flugzeugen für Start, Landung und Langsamflug dienen. Diese kommen bei zivilen Verkehrs- und sonstigen Transportflugzeugen, aber auch bei Geschäftsreise- und motorgetriebenen Sportflugzeugen zum Einsatz. Bei zivilen Verkehrs- und sonstigen Transportflugzeugen haben sich Hochauftriebssysteme mit Flügelvorderkantenklappen und Flügelhinterkantenklappen als wesentliche aerodynamisch wirksame Hochauftriebselemente durchgesetzt. Flügelvorderkantenklappen werden dabei mit und ohne Spalt zwischen Klappe und Hauptflügel, Hinterkantenklappen meist als Einfach- oder Mehrfachspalthinterkantenklappen ausgeführt.

Die Betätigung solcher Klappen oder Hochauftriebselemente erfolgt derzeit in der Regel manuell über einen Bedienhebel im Cockpit, wobei in einer Klappensteuerungseinheit der Hebelstellung entsprechende elektrische Signale erzeugt werden, die durch elektrische oder hydraulische Aktuatoren die Klappenstellung steuern. Üblicherweise werden die Klappen oder Hochauftriebselemente für Start, Warteflug und Landung ausgefahren, während sie im Reiseflug eingefahren sind, um den aerodynamischen Widerstand zu verringern. Da für Start, Landung und ggf. Warteflug unterschiedlich große Ausschlagwinkel hinsichtlich Flugleistung und Lärmerzeugung optimal sind, lassen sich verschiedene Stellungen anwählen.

Weiter gibt es Konzepte, Vorderkantenhochauftriebshilfen als Überziehschutz bei Überschreitung eines kritischen Anstellwinkels bzw. bei Unterschreitung einer vorgegebenen Fluggeschwindigkeitsgrenze automatisch auszufahren, so dass ein Strömungsabriss und der damit verbundene Auftriebsverlust vermieden wird. Auch gibt es Systeme, die eine strukturelle Überlastung der Vorder- oder Hinterkantenklappen bei Überschreitung einer oberen vorgegebenen Grenzfluggeschwindigkeit durch Einfahren verhindern sollen.

Es sind auch Konzepte bekannt, die darauf abzielen, die Steuerung von Hochauftriebssystemen zu automatisieren. Bei diesen kann unterschieden werden zwischen solchen, die einer Flugleistungsoptimierung dienen sollen, was insbesondere für den Start relevant ist, und solchen, bei denen es in erster Linie darum geht, das Flugzeug vor Beschädigungen oder dem Eintreten unkontrollierter Flugzustände zu schützen.

Aus der US 2 350 751 ist ein System bekannt, bei dem sowohl die Ansteuerung als auch das Aus- und Einfahren von Hinterkantenklappen mittels eines Motors elektrisch vorgenommen werden. Der Klappenausschlag soll so gesteuert werden, dass der Maximalauftrieb des Flugzeugflügels erhöht wird. Ein Klappenhebel erlaubt die manuelle Wahl von drei verschiedenen Ausschlagwinkeln, nämlich einem, bei dem der Ausschlagwinkel Null ist (im weiteren auch als "eingefahrener Zustand" oder "Reisestellung" bezeichnet), einem für den Start, und einem für die Landung. Das bekannte System ist dazu vorgesehen, die Klappen nach dem Start automatisch einzufahren, wenn ein gewisser Staudruck überschritten wird. Gemäß einer während des Flugs über den Klappenhebel gewählten Klappenhebeistellung fahren die Klappen bei Unterschreiten des von der gewählten Konfiguration unabhängigen Staudruckschwellwerts in die korrespondierende Start- oder Landestellung aus.

Das System erlaubt es, bei Staudrücken unterhalb des Staudruckschwellwerts alle drei Klappenpositionen über den Klappenhebel zu wählen, wobei die gewählten Konfigurationen unmittelbar eingenommen werden. Oberhalb des Schwellwerts wird unabhängig von der Klappenhebelstellung stets ein Übergang in die eingefahrene Position veranlasst.

Bei dem bekannten System ist nachteiligerweise nur ein einziger Schaltstaudruck vorgesehen. Geeignete Geschwindigkeiten für das Zurücksetzen der Klappen von der Start- in die Reisestellung sind aufgrund aerodynamischer, strukturmechanischer und flugleistungsbedingter Randbedingungen von Hochauftriebssystemen moderner Großflugzeuge bezüglich der Geschwindigkeit für das Ausfahren der Klappen von der Reise- in die Landeanflugstellung stark verschieden. Bei den üblichen manuell betätigten Klappensystemen dieser Flugzeuge wird dem durch eine Kaskade sich überlappender Geschwindigkeitsbereiche benachbarter diskreter Klappenausschlag-winkel, d.h. Klappenstellungen, Rechnung getragen. Die Veränderung der Klappenkonfiguration von der Reise- in die Landestellung erfolgt mit Zwischenschritten in Stufen. Um ausreichend große Geschwindigkeitsüberlappungen bei einem großen Verkehrsflugzeug zu erhalten, benötigt man mehr als nur zwei oder drei verschiedene Stellungen für die Hochauftriebsklappen, wenn gleichzeitig die maximalen Betriebsgeschwindigkeiten in den einzelnen Konfigurationen begrenzt sind. Beim Airbus A320 gibt es beispielsweise sechs verschiedene Stellungen (0, 1, 1+F, 2, 3, Full). Die Begrenzung der maximalen Betriebsgeschwindigkeit dient der Vermeidung von Flugzuständen, bei denen unzulässig hohe strukturelle Lasten an den Hochauftriebsklappen auftreten können. Durch Limitierung der Betriebsgeschwindigkeiten reduzieren sich die zu erwartenden Lasten und somit kann bei entsprechender Dimensionierung das Strukturgewicht auf ein im Sinne des Gesamtentwurfs optimales Maß limitiert werden.

Die DE 25 31 799 C3 beschreibt eine fahrtabhängige Klappenschaltautomatik, die eine weitgehend automatische Klappensteuerung umfasst. Ziel ist es, Unfälle zu vermeiden, die auf Unterlassung des Klappensetzens durch die Besatzung des Flugzeugs zurückzuführen sind. Im Unterschied zu der vorher genannten bekannten Einrichtung sind hier nur zwei Klappenstellungen vorgesehen, statt drei. Dagegen ist weiterhin eine Geschwindigkeitshysterese vorgesehen, die im Flug dazu führt, dass die Klappen bei einer höheren Fluggeschwindigkeit eingefahren und bei einer im Vergleich dazu geringeren Fluggeschwindigkeit erst wieder ausgefahren werden, wenn die Schalterkonfiguration eines bei dieser bekannten Klappenschaltautomatik vorgesehenen Staudruckschalters nicht verändert wird. Befindet sich der dynamische Druck in einem Bereich, der deutlich größer ist als Null, aber geringer als für das Abheben erforderlich, wird ein Kontakt des Staudruckschalters geschlossen, der den elektrischen Klappenantrieb in Einfahrrichtung mit Strom versorgt. Bei Erhöhung des Staudrucks wird dieser Stromkreis unterbrochen. In dem an den Unterbrechungsbereich anschließenden höheren Druckbereich, der unterhalb eines zum Abheben erforderlichen dynamischen Drucks beginnt und bei Werten endet, die für den Anfangssteigflug typisch sind, wird ein anderer Kontakt geschlossen, wodurch der Klappenantriebsmotor in Klappenausfahrrichtung mit Strom versorgt wird. Bei einer anderen Ausführungsform dieser bekannten Schaltautomatik wird der Stromkreis zum Ausfahren der Klappen bereits beim Anrollen durch einen an die Drehzahl der Fahrwerksräder angekoppelten Schalter geschlossen. Bei weiterer Erhöhung auf einen für den Reiseflug typischen Staudruck führt das Schließen eines dritten Kontaktes wiederum zum Einfahren der Klappen. Zwischen den einzelnen Staudruckbereichen liegen Zonen, in denen keiner der Stromkreise geschlossen ist. Bei neuerlicher sukzessiver Staudruckverminderung erfolgt der geschilderte Ablauf in umgekehrter Reihenfolge. Bei sehr kleinen und bei großen Fluggeschwindigkeiten entsprechend den anliegenden Staudrücken wird die Klappe also in den eingefahrenen Zustand gebracht, bei mittleren Staudrücken, die typisch für das Abheben des Flugzeugs, Anfangssteigflug, sowie Landeanflug und Landung sind, wird die Klappe ausgefahren oder im ausgefahrenen Zustand belassen. Optional ist es nach der bekannten Lösung auch möglich, die Klappen vor dem Stand manuell auszufahren. Ein geöffneter Unterbrechungsschalter verhindert dann das Einfahren der Klappen während des Startrollvorgangs. Nachteil der bekannten Klappenschaltautomatik ist es, dass lediglich die Ansteuerung zweier Klappenpositionen (eingefahrene bzw. ausgefahrene Position) möglich ist. Weiterer Nachteil ist, dass sich zwar die Schaltstaudrücke durch Verschiebung der Schleifkontakte des Staudruckschalters modifizieren lassen, jedoch bedarf es hierzu eines Eingriffs seitens des Piloten. Je nach aktueller Masse des Flugzeugs müssen jeweils vor dem Start und vor der Landung die Schaltgeschwindigkeiten eingestellt werden, um das Einfahren bzw. Ausfahren der Klappen bei geeigneten Geschwindigkeiten herbeizuführen.

Die US 4 042 197 beschreibt eine weitere Hochauftriebsautomatik für Start und Landung eines Flugzeugs, mit dem Unterschied, dass die Steuerung für beide Flugphasen deutlich voneinander verschieden ist. Ziel ist es, Lärmemissionen am Boden durch das Flugzeug bei Start und Landung zu reduzieren. Beim Start soll durch die Automatik ein im Vergleich zur herkömmlichen manuellen Betätigung früheres Einfahren der Klappen nach dem Abheben erfolgen, wodurch der aerodynamische Widerstand verringert und die Steigrate frühzeitig erhöht werden soll. Beim Anflug soll die Automatik ermöglichen, dass das Flugzeug später in die Landekonfiguration gebracht wird, als es bei manueller Wahl der Klappenstellung durch einen Piloten üblich ist.

Bei der bekannten Automatik werden die Klappen vor dem Start manuell mit Betätigung über einen Klappenhebel ausgefahren. Anschließend wird der Klappenhebel in die Stellung gebracht, bis zu der die Automatik die Klappen nach dem Start automatisch einfahren soll. Nähere Erläuterungen zur notwendigen Schaltlogik werden nicht gemacht. Das automatische Einfahren der Klappen nach dem Start erfolgt fluggeschwindigkeitsabhängig, nachdem das Fahrwerk eingefahren wurde. Die Geschwindigkeit, bei der das Einfahren der Klappen beginnt, wird vor dem Start durch die Cockpitbesatzung vorgewählt. Die Längsbeschleunigung des Flugzeugs wird zweimal integriert, um den Abstand vom Beginn des Startrollvorgangs zu ermitteln. Bei Erreichen einer vorgewählten Distanz erfolgt eine Cockpitanzeige, die der Besatzung den Punkt zum Reduzieren des Triebwerksschubs anzeigt. Neben der Zurücknahme des Schubes wird außerdem der Längsneigungswinkel des Flugzeugs so weit reduziert, dass das Flugzeug bei deutlich verringerter Steigrate trotz des geringeren Vortriebs beschleunigt und so schließlich die Schaltgeschwindigkeit zum Einfahren der Klappen erreicht.

Bei dieser bekannten Hochauftriebsautomatik ist in der Anflugphase vorgesehen, die Klappen in Abhängigkeit vom Abstand zum (Soll-) Aufsetzpunkt oder von der fortlaufend gemessenen Höhe auszufahren. Im ersten Fall wird die Entfernungsinformation entweder durch ein Trägheitsnavigationssystem oder über die Auswertung eines DME-Signals zur Verfügung gestellt. Im zweiten Fall wird die barometrische Höhe verwendet, die explizit der Radiohöhe vorgezogen wird. Sowohl die Betriebsart als auch die Entfernung bzw. die Höhe, bei der die Landekonfiguration erreicht werden soll, wird von der Cockpitbesatzung über eine Bedieneinheit vorgegeben. Das bekannte System sieht einen Anflug mit kontinuierlicher Verzögerung vor, bei dem auch die Klappen kontinuierlich von der eingefahrenen Stellung in die Landestellung gebracht werden. Sowohl der Triebwerksschub als auch der Einstellwinkel eines trimmbaren Höhenleitwerks werden über Vorsteuerungsfunktionen an die jeweilige Klappenstellung angepasst. Das Fahrtkommando für den Vortriebsregler wird in Abhängigkeit der Klappenstellung angepasst. Bei einer über die Bedie-neinrichtung vom Piloten eingegebenen Endanflugge-schwindigkeit als untere Grenze wird schließlich die Landeklappenkonfiguration erreicht.

Nachteil dieser bekannten Hochauftriebsautomatik ist, dass die Piloten vor Beginn des Anflugs manuell angeben müssen, welche Signale zur Steuerung der Automatik für die Hochauftriebsklappen verwendet werden sollen. Die manuelle Vorgabe von Flugführungsparametern (Geschwindigkeit, Distanz, Höhe) durch den Piloten erhöht nicht nur dessen Arbeitsbelastung, sondern birgt auch die Gefahr von Fehleingaben. Eine Durchstartlogik für den Fall, dass aus dem Landeanflug durchgestartet werden soll, ist nicht vorhanden, so dass eine manuelle Bedieneinrichtung parallel zu der beschriebenen Automatik erforderlich ist.

Die EP 1 684 144 A1 schließlich schlägt neben einer den bzw. die Piloten unterstützenden Funktion, die ein Signal für eine Anzeige für das Ausfahren der Hochauftriebsklappen an einem optimalen Punkt der Anflugtrajektorie umfasst, alternativ auch die Verwendung des besagten unterstützenden Signals für ein automatisches Ausfahren der Hochauftriebsklappen vor. Es wird angegeben, dass die Automatikfunktion vorzugsweise in einem Flight-Management-System implementiert werden soll. Dazu soll ein Navigationssystem dienen, das auf der Vorplanung von lateralen und vertikalen Flugpfadprofilen basiert. Schaltbedingungen für den Übergang von einem Pfadabschnitt auf einen anderen, aber auch zur Erzeugung eines Signals, welches dazu führt, dass die Hochauftriebsklappen in eine der Vorplanung entsprechende Position gebracht werden, sind in Form von Höhen, Fluggeschwindigkeiten oder lateralen Positionen des Flugzeugs oder einer Kombination aus diesen Parametern festgelegt. Erreichen oder überschreiten die zum Schalten notwendigen Zustandsparameter die Schaltbedingungen, so werden die Hochauftriebsmittel in die laut Planung zugeordnete Position gebracht.

Nachteil dieser Funktionalität ist, dass es nur für die Anflugphase angewendet werden kann. Der automatische Betrieb der Hochauftriebsklappen ist damit bei der Flugvorbereitung, dem Rollen am Boden, dem Start, im Steig- und Reiseflug, beim Durchstarten aus dem Anflug, bei der Landung, sowie beim Betrieb am Boden nach der Landung nicht vorgesehen. Weiterhin sind für die Führung des Flugzeugs entlang des vorgeplanten Flugpfades entsprechende Navigationsinformationen zwingend erforderlich. Stehen diese Informationen nicht zur Verfügung, so kann das Navigationssystem nicht arbeiten und somit steht auch die Funktionalität für das automatische Ausfahren der Hochauftriebsklappen nicht zur Verfügung.

Des weiteren ist die US 2006/049308 bekannt, die den nächst liegenden Stand der Technik darstellt und den Oberbegriff der Ansprüche 1 bzw. 13 offenbart.

Die Aufgabe der Erfindung ist es, eine Einrichtung zur automatischen Steuerung von Hochauftriebssystemen eines Flugzeugs anzugeben, welche eine Verminderung der Arbeitsbelastung des oder der Piloten des Flugzeugs in bodennahen Flugphasen ermöglicht. Insbesondere soll die Flugsicherheit durch Verringerung der Möglichkeiten fehlerhafter Bedienung erhöht werden. Auch sollen die Flugleistungen des Flugzeugs vornehmlich beim Start und im Steigflug verbessert werden.

Die gestellte Aufgabe wird durch eine Einrichtung mit den Merkmalen des Anspruchs 1 bzw. 13 gelöst.

Durch die Erfindung wird eine Einrichtung zur automatischen Steuerung eines Hochauftriebssystems eines Flugzeugs geschaffen, welches Hochauftriebselemente, die in eine eingefahrene und mehrere ausgefahrene Konfigurationen für Reiseflug, Warteflug, Start oder Landung einstellbar sind, eine Klappensteuerungseinheit, welche über eine Steuerverbindung funktionswirksam mit einem Antriebssystem der Hochauftriebselemente verbunden ist und eine an die Klappensteuerungseinheit angeschlossene Bedieneinheit zur Eingabe von die Einstellung der Hochauftriebselemente beeinflussenden Bedienkommandos umfasst.

Erfindungsgemäß ist die Klappensteuerungseinheit zur Berechnung von den jeweiligen Konfigurationen sowie den Richtungen der Konfigurationsänderung zugeordneten Schaltgeschwindigkeiten für die Verstellung der Hochauftriebselemente in Abhängigkeit von Flugzustandsdaten und/oder weiteren flugbetriebsrelevanten Daten vorgesehen und die Klappensteuerungseinheit ist dazu vorgesehen, die den Konfigurationswechsel kommandierenden Befehle in Abhängigkeit von der Fluggeschwindigkeit und/oder anderen Flugzustandsdaten automatisch zu erzeugen.

Gemäß einer ersten Ausführung der erfindungsgemäßen Einrichtung zur automatischen Steuerung eines Hochauftriebssystems eines Flugzeugs ist die Klappensteuerungseinheit für eine automatische Umschaltung von Betriebsarten für Start bzw. Landeanflug vorgesehen.

Gemäß einer zweiten Ausführung ist die Klappensteuerungseinheit dazu vorgesehen, die Hochauftriebselemente bei Fehlen einer über die Bedieneinheit vorgenommenen Vorwahl automatisch bis in die üblicherweise für die Landung vorgesehene Konfiguration während des Anflugs zu bringen, wenn die entsprechenden geschwindigkeitsabhängigen Konfigurationswechsel bzw. Schaltbedingungen erfüllt sind.

Andere vorteilhafte Ausführungsformen und Weiterbildungen der erfindungsgemäßen Einrichtung sind in den übrigen Unteransprüchen angegeben.

Im folgenden werden Ausführungsbeispiele der Erfindung anhand der Zeichnung erläutert.

Es zeigt:

Fig. 1 eine schematisierte Darstellung eines Flugzeugs mit Hochauftriebselementen in Form von am Tragflügel angeordneten Vorder- und Hinterkantenklappen;

Fig. 2 ein Blockdiagramm, welches eine Einrichtung zur automatischen Steuerung eines Hochauftriebssystems eines Flugzeugs gemäß einem Ausführungsbeispiel der Erfindung zusammen mit weiteren Komponenten zeigt, die für die Funktion des Systems von Bedeutung sind;

Fig. 3 ein Diagramm, welches zum Verständnis von im folgenden verwendeten Geschwindigkeitsdefinitionen dienlich ist;

Fig. 4 eine Draufsicht auf eine Bedieneinheit einer Einrichtung zur automatischen Steuerung eines Hochauftriebssystems eines Flugzeugs gemäß einem Ausführungsbeispiel der Erfindung;

Fig. 5 ein Zeitdiagramm, welches Zeitverläufe von Zustands- und Steuerparametern während des Starts gemäß einem Ausführungsbeispiel der Erfindung zeigt;

Fig. 6 Diagramme, welche eine steigleistungsoptimale Arbeitskurve für eine geschwindigkeitsgesteuerte Einrichtung zur automatischen Steuerung eines Hochauftriebssystems eines Flugzeugs beim Start gemäß einem Ausführungsbeispiel der Erfindung zeigt, sowie zugeordnete Klappenkonfigurationen in Abhängigkeit von der Geschwindigkeit;

Fig. 7 ein Diagramm, welches Zeitverläufe von Zustands- und Steuerparametern während Anflug, Landung und während des Rollens nach der Landung gemäß einem Ausführungsbeispiel der Erfindung zeigt:

Fig. 8 ein Diagramm, welches eine Arbeitskurve für eine geschwindigkeitsgesteuerte Einrichtung zur automatischen Steuerung eines Hochauftriebssystems eines Flugzeugs beim Anflug gemäß einem Ausführungsbeispiel der Erfindung zeigt;

Fig. 9 ein Diagramm, welches Zeitverläufe von Zustands- und Steuerparametern während des Übergangs vom Anflug in den Steigflug bei einem Durchstartmanöver zeigt;

Fig. 10 ein Diagramm, in welchem der Übergang von der Arbeitskurve für den Anflug in die Arbeitskurve für den Start im Durchstartfall dargestellt ist;

Fig. 11 ein Diagramm, welches den Übergang von der Arbeitskurve für den Start auf die Arbeitskurve für den Anflug darstellt;

Fig. 12 ein vereinfachtes Programmablaufdiagramm einer automatischen Steuerung des Hochauftriebssystems eines Flugzeugs gemäß einem Ausführungsbeispiel der Erfindung;

Fig. 13 ein vereinfachtes Programmablaufdiagramm eines Unterprogramms, das wesentliche Elemente der Steuerungslogik enthält;

Fig. 14 ein Programmablaufdiagramm einer Logik die ermöglicht die Bedingungen zu ermitteln, bei denen die Automatik nicht wirksam sein soll;

Fig. 15 ein Programmablaufdiagramm einer Logik zur Betriebsartenumschaltung;

Fig. 16 ein Programmablaufdiagramm eines Unterprogramms, das einen Parameter ermittelt, der das automatische oder manuelle Einfahren der Hochauftriebsklappen am Boden steuert, und

Fig. 17 ein Programmablaufdiagramm für eine Logik, die Konfigurationswechselgeschwindigkeiten ermittelt und anhand des momentan vorliegenden Konfigurationskommandos und der momentanen Fluggeschwindigkeit sowie gegebenenfalls der Flughöhe Signale zum Ein- oder Ausfahren der Hochauftriebsklappen generiert.

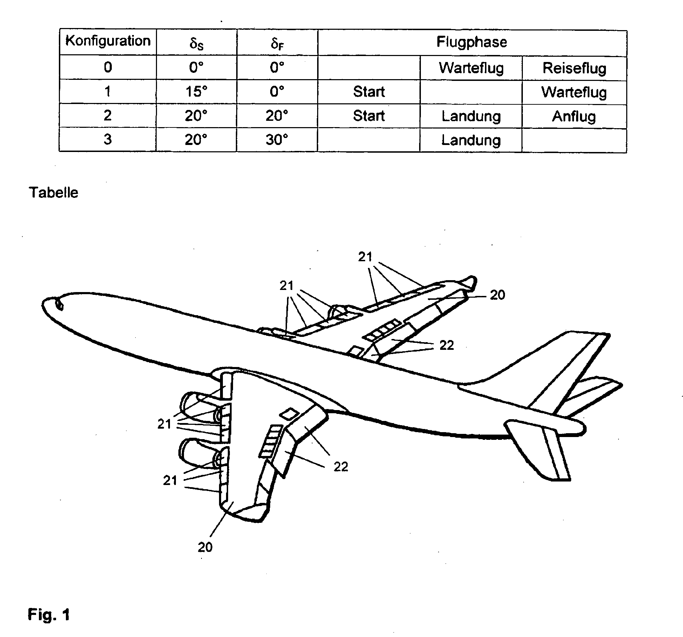

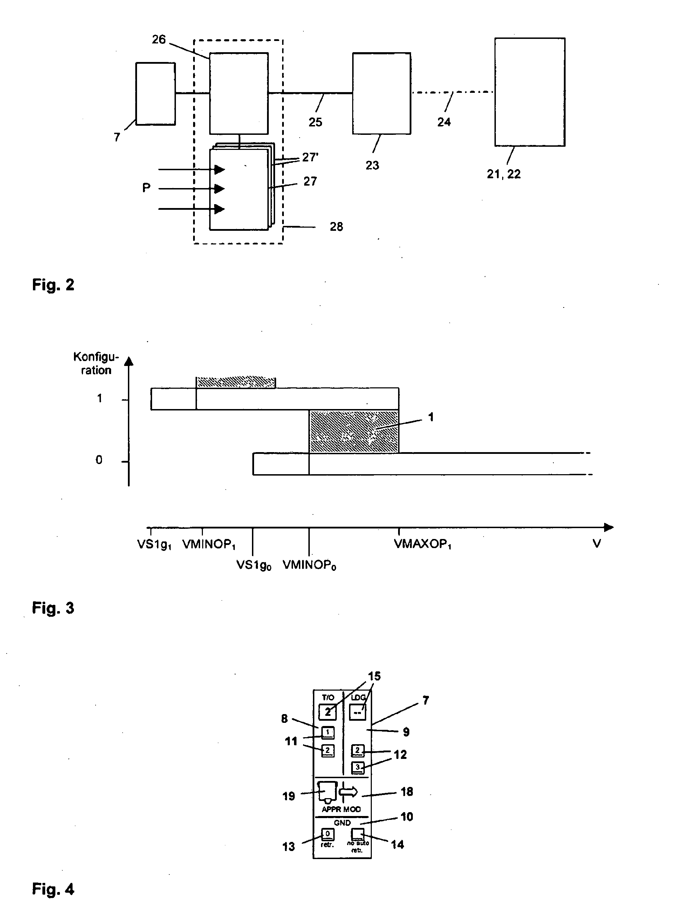

In Fig. 1 ist ein Teil eines am Tragflügel 20 eines Flugzeugs angeordneten Hochauftriebssystems dargestellt, welches Hochauftriebelemente in Form von Vorderkantenklappen 21 und Hinterkantenklappen 22 umfasst. Diese sind jeweils in einer an sich bekannten, geeigneten Weise mittels eines in Fig. 2 abgebildeten Antriebssystems 23, 24 das in der Regel mindestens zwei Antriebseinheiten 23 und mit den Klappen 21, 22 gekoppelte mechanische Antriebsverbindungen 24 umfasst, ausfahrbar und einfahrbar. Die Steuerung der Hochauftriebsklappen 21, 22 erfolgt mittels einer in Fig. 2 abgebildeten Klappensteuerungseinheit 26, die über eine Steuerverbindung 25 funktionswirksam mit dem Antriebssystem 23, 24 verbunden ist, um die Hochauftriebselemente, die in Fig. 2 unter einem Bezugszeichen 21, 22 zusammengefasst dargestellt sind, in Abhängigkeit von erhaltenen Steuerbefehlen über besagte geeignete mechanische Verbindungen 24 zu verstellen.

Die Klappensteuerungseinheit 26 kann softwaremäßig implementiert Bestandteil eines Bordcomputers 28 sein, welcher neben weiteren Funktionen 27' auch Funktionen zur Erfassung, Aufbereitung und Weiterleitung von für den Flugzeugbetrieb relevanten Daten umfasst. Letztere Funktionen sind unter dem Bezugszeichen 27 zusammengefasst.

Eine an die Klappensteuerungseinheit 26 angeschlossene Bedieneinheit 7 dient zur Einstellung der Startkonfiguration der Hochauftriebsklappen 21, 22, der Vorwahl der Lande-konfiguration sowie zur Eingabe weiterer, die automatische Steuerung beeinflussender Bedienkommandos.

Das Hochauftriebssystem des Flugzeugs ist in Fig. 1 mit Vorderkantenklappen 21 und Hinterkantenklappen 22 dargestellt. Dies ist jedoch nur beispielhaft zu verstehen. Das Hochauftriebssystem kann auch in anderer Weise vorgesehen sein, beispielsweise nur mit Hinterkantenklappen 22, durch kontinuierlich in ihrer Krümmung veränderbare flexible Flügelbereiche oder in einer sonstigen geeigneten Weise. Dies soll durch die Bezeichnung "Hochauftriebselemente" zum Ausdruck gebracht werden. Die Erfindung ist nicht beschränkt auf Hochauftriebssysteme, bei welchen Vorderkantenklappen 21 und Hinterkantenklappen 22 kombiniert sind.

Die Steuerverbindung 25 zwischen der Klappensteuerungseinheit 26 und dem Antriebssystem 23, 24 umfasst einerseits die Übertragung von gemeinsamen Kommandos zum Einstellen der Vorderkantenklappen 21 und der Hinterkantenklappen 22 in die jeweils gewünschten Positionen, die zusammenfassend gemäß der Tabelle auf dem ersten Abbildungsblatt als Konfigurationen bezeichnet werden und andererseits die Übertragung von Rückmeldungen an die Klappensteuerungseinheit 26 über die von den Hochauftriebsklappen 21, 22 eingenommene Konfiguration.

Bei dem hier beschriebenen Ausführungsbeispiel besitzt das Hochauftriebssystem n = 4 diskrete Konfigurationen, bezeichnet mit 0, 1, 2 und 3. Bei anderen Ausführungsbeispielen kann das System aber auch eine hiervon abweichende kleinere oder größere Zahl von Konfigurationen aufweisen. Die Tabelle auf Blatt 1 der Figuren enthält beispielhafte Kombinationen möglicher Ausschlagwinkel □S der Flügelvorderkantenklappen 21 und □F der Flügelhinterkantenklappen 22, die in Kombinationen als Konfigurationen bezeichnet werden. Das Antriebssystem 23 ordnet die den jeweiligen Konfigurationsvorgaben der Klappensteuerungseinheit 26 zugehörigen kommandierten Positionen der Vorder- und der Hinterkantenklappen gemäß der Tabelle zu. Die Tabelle enthält weiterhin die Zuordnung der Konfigurationen zu den einzelnen Flugphasen für das vorliegende Ausführungsbeispiel.

Zur Beschreibung der automatischen Steuerung der Hochauftriebsklappen 21, 22 ist die Definition von Geschwindigkeiten nützlich, welche im Zusammenhang mit der jeweils von den Hochauftriebsklappen 21, 22 eingenommenen Konfiguration von Bedeutung sind. Eine auf einer Luftdatenmessung basierende kalibrierte Fluggeschwindigkeit dient als primäre Vergleichsgröße für die Steuerung des die Hochauftriebsklappen 21, 22 umfassenden Hochauftriebssystems des Flugzeugs. Ein die Fluggeschwindigkeit repräsentierendes Signal wird vor seiner weiteren Verwendung mittels eines Tiefpassfilters geglättet, um kurzzeitige Störungen des Signals auszugleichen, wie sie beispielsweise durch Turbulenz verursacht werden können.

Der normale Betriebsbereich eines Flugzeugs ist durch Betriebsgrenzgeschwindigkeiten limitiert, sowohl mit eingefahrenen, als auch mit ausgefahrenen Klappen des Hochauftriebssystems 21, 22. Fig. 3 verdeutlicht an einem Beispiel zweier benachbarter Konfigurationen des Hochauftriebssystems 21, 22 die Lage der einzelnen Geschwindigkeiten.

In der Konfiguration 0 befinden sich sowohl die Flügelvorderkantenklappen 21 als auch die Flügelhinterkantenklappen 22 in einer vollständig eingefahrenen Position, wie sie einer Reiseflugstellung entspricht. In einer Konfiguration 1 befinden sich die Hochauftriebsklappen 21, 22 in einem ausgefahrenen Zustand, wobei es, wie bereits weiter oben erläutert, grundsätzlich nicht von Bedeutung ist, ob dabei Vorderkantenklappen 21 oder Hinterkantenklappen 22 ausgefahren sind oder eine Kombination beider Klappentypen oder andere Hochauftriebselemente betätigt sind.

Bei der Geschwindigkeit VS1g1 reißt die Strömung am Flügel 20 in der Konfiguration 1 ab, wenn der Auftrieb des Flugzeugs dem Flugzeuggewicht entspricht (Lastvielfaches n = 1). Diese Geschwindigkeit hängt im wesentlichen von der aktuellen Masse des Flugzeugs und weiterhin von der Flugmachzahl ab. Durch Hinzufügen einer Sicherheitsmarge zu VS1g1 erhält man die (höhere) minimale operationelle Betriebsgeschwindigkeit VMINOP1 für die Konfiguration 1.

Die besagte Sicherheitsmarge ist allgemein meist über Faktoren kj definiert, so dass

$$VMINOPi = kj \cdot VS1gi,$$

wobei i ein Index für die einzelnen Konfigurationen ist und der Index j verschiedene Faktoren k bezeichnet, die je nach Konfiguration aber auch abhängig von der Flugphase verschiedene Werte annehmen können.

Nach oben wird der normale operationelle Betriebsbereich der Konfiguration 1 durch eine Maximalgeschwindigkeit VMAXOP1 begrenzt.

Die Definitionen der Geschwindigkeiten VS1g0 und VMINOP0 in der Reiseflugkonfiguration 0 sind analog zu den Definitionen für VS1g1 und VMINOP1 in der Konfiguration 1.

Der schraffierte Bereich 1 kennzeichnet ein Geschwindigkeitsband, in welchem sich sowohl die Geschwindigkeiten der Konfiguration 0 als auch der Konfiguration 1 in den normalen operationellen Bereichen befinden, wo also sowohl in der Konfiguration 1 als auch in der Konfiguration 0 ein ausreichender Auftrieb für einen sicheren Flugbetrieb vorhanden ist. Es existiert auch eine maximale operationelle Betriebsgeschwindigkeit in der Konfiguration 0, also am oberen Ende des Reisefluggeschwindigkeitsbereichs mit vollständig eingefahrenen Klappen 21, 22, die jedoch für die automatische Steuerung des Hochauftriebssystems keine Bedeutung hat.

Für die weitere Beschreibung sollen die folgenden Szenarien betrachtet werden:

- Startvorbereitung, Start und Steigflug

- Anflug, Landung, Betrieb des Flugzeugs nach der Landung am Boden

- Warteflug - Durchstarten aus dem Anflugsegment bzw. Durchstarten nach Bodenberührung ("Touch and Go")

- Abbruch des Steig- und Beschleunigungsflugs nach dem Start mit unmittelbar anschließendem Landeanflug.

Es wird davon ausgegangen, dass alle Flugzeugsysteme ordnungsgemäß funktionieren.

Ein Ausführungsbeispiel für eine Bedieneinheit 7 der beschriebenen Hochauftriebsautomatik ist in Fig. 4 dargestellt. Die Bedieneinheit umfasst einen Teil für die Vorgabe einer Startkonfiguration (T/O) 8, einen Teil für die Vorwahl einer Landekonfiguration (LDG) 9, einen Teil zur Umschaltung von der Start- in die Anflugbetriebsart der Automatik, 18, und einen Teil für zusätzliche Steuerfunktionen am Boden, 10. Einzelne Startkonfigurationen können über Tasten 11 gewählt werden, die im Bedienfeld 8 zur Startkonfigurationswahl vorgesehen sind. Entsprechend erlauben Tasten 12 die Vorwahl von Landekonfigurationen im Bedienfeld 9 für die Landekonfigurationsvorwahl. Numerische Anzeigen 15 sind vorgesehen, um die jeweiligen Werte zur Bestätigung der vorgenommenen Wahl anzuzeigen. Bei dem in Fig. 4 dargestellten Beispiel wurde die Konfiguration 2 für den Start gewählt, während eine Landekonfiguration nicht vorgewählt wurde.

Eine in dem Bedienfeld 10 für die Bodensteuerfunktionen vorgesehene Taste 13 ermöglicht das Einfahren der Hochauftriebshilfen am Boden. Ein Wechselschalter 14 dient als Automatiksperre und ermöglicht nach Betätigung die Unterbindung des automatischen Einfahrens der Hochauftriebsklappen 21, 22 nach der Landung. Der Schaltzustand der Automatiksperre 14 wird durch eine im Schalter integrierte Lampe angezeigt. Bei Betätigung eines Tastschalters 19 im Bedienfeld Umschaltung 18 kann während des Flugs eine explizite, direkte Umschaltung von der Startbetriebsart in die Anflugbetriebsart der Automatik vorgenommen werden, für den Fall, dass Anflug und Landung unmittelbar nach dem Start erfolgen sollen und die Fluggeschwindigkeit noch nicht so weit angewachsen ist, dass eine vorgesehene automatische Betriebsartenumschaltung erfolgt. Der Schalter 19 kann durch eine Klappe abgedeckt sein, um eine unbeabsichtigte Betätigung zu verhindern.

Weitere Informationen über den aktuellen Zustand des Systems, insbesondere über die automatisch oder manuell kommandierte Soll-Konfiguration sowie die aktuelle Stellung der Flügelvorderkanten- 21 und Hinterkantenklappen 22, aber auch Informationen über eventuelle Systemstörungen werden der Besatzung über konventionelle Cockpitanzeigevorrichtungen zur Verfügung gestellt, die selbst nicht Gegenstand der Erfindung sind.

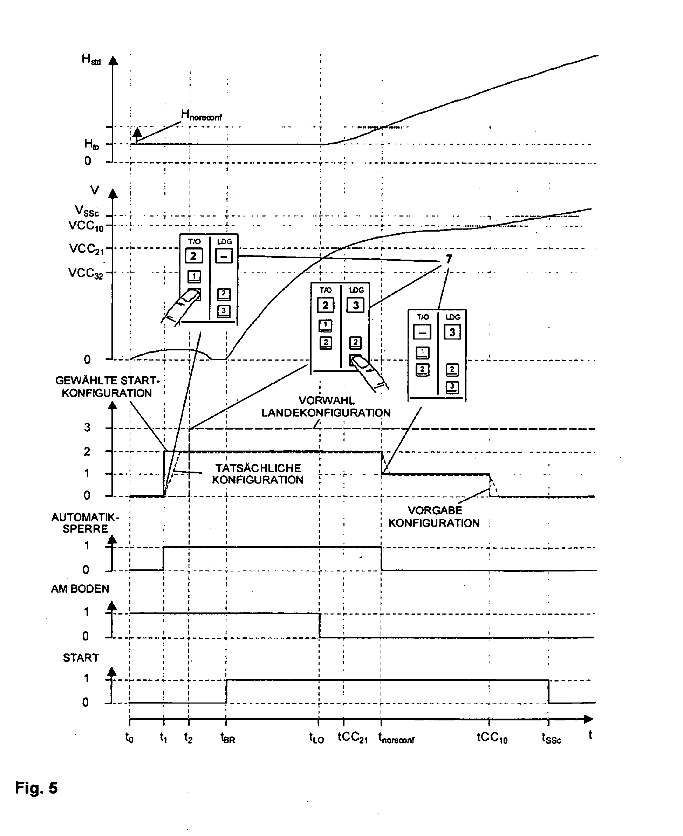

Fig. 5 zeigt die zeitlichen Verläufe von Zustands- und Steuerparametern während Startvorbereitung, Start und Steigflug des Flugzeugs.

Im Stand oder beim Rollen am Boden wird die erforderliche Startstellung der Hochauftriebsklappen 21, 22 von einem Piloten manuell über die Tasten 11 des Abschnitts 8 der Bedieneinheit 7 vorgegeben, vgl. Fig. 4. Im Beispiel ist das die Konfiguration 2, vgl. Fig. 5.

Das Wiedereinfahren der Hochauftriebselemente 21, 22 am Boden ist bei Bedarf durch Betätigung der Taste 13 des Bedienfeldes 10 Bodensteuerfunktionen der Bedieneinheit 7 möglich, wobei das System in den Anfangszustand zurückgesetzt wird.

Um ein zu frühes Einfahren der Klappen beim Startvorgang zu vermeiden, wird der Parameter "AUTOMATIKSPERRE" durch die Startkonfigurationswahl auf den Wert 1 gesetzt.

Bei dem vorliegenden Ausführungsbeispiel wird die Ausführung der Klappenstellsignale der Klappenautomatik so lange unterbunden, bis das Signal "AUTOMATIKSPERRE" auf den Wert Null schaltet. Bei dem vorliegenden Ausführungsbeispiel erfolgt die Umschaltung des Signals "AUTOMATIKSPERRE" auf Null bei Erreichen einer Höhe über dem Niveau der Startbahn, die einem vordefinierten Wert Hnoreconf entspricht.

Bei anderen Ausführungsbeispielen kann der Schaltpunkt der Automatiksperre auch mit anderen Konditionen oder Kombinationen daraus verknüpft sein, etwa dem Einfahren des Fahrwerks, nachdem eine Strecke gemessen vom Punkt des Losrollens auf der Startbahn zurückgelegt ist oder dem Schalten des Signals "AM BODEN" auf Null. Das Signal "AM BODEN" wird in bekannter Art beispielsweise durch einen Sensor anhand der Einfederung der Hauptfahrwerksbeine des Flugzeugs ermittelt. Federt das Fahrwerksbein durch Entlastung beim Abheben aus, so wird dieses Signal auf den Wert Null gesetzt.

Weiterhin ist es denkbar, dass das Umschalten des Parameters "AUTOMATIKSPERRE" erst nach Verstreichen einer Verzögerungszeit nach Eintreten der notwendigen Schaltbedingung bzw. -bedingungen erfolgt.

Vorzugsweise erfolgt bereits vor dem Start, bei t2 über die Tasten 12 des Teils 9 der Bedieneinheit 7 die (Vor-) Wahl einer voraussichtlich geeigneten Konfiguration der Hochauftriebsklappen 21, 22 für Anflug und Landung am vorgesehenen Ziel. Im Beispiel ist das die Konfiguration 3 (vgl. Fig. 5). Diese Wahl kann bei Bedarf während des Fluges etwaigen sich ändernden Anflugbedingungen (Wind, Bahn) manuell durch die Besatzung angepasst werden. Um die Konsequenzen von Bedienfehlern abzuschwächen, werden die Hochauftriebsklappen 21, 22 im später beschriebenen Anflugmodus geschwindigkeitsabhängig bis in die üblicherweise für die Landung vorgesehene Konfiguration gebracht, falls eine manuelle Vorwahl nicht erfolgt ist.

Mit Setzen des Startschubs zum Zeitpunkt tBR wird ein entsprechendes Signal erzeugt und es erfolgt automatisch eine Umschaltung des Parameters "START" vom Wert Null auf den Wert 1, was der Umschaltung von der Anflug- in die Startbetriebsart entspricht. In dieser Schaltkonfiguration werden die Konfigurationswechselgeschwindigkeiten für den Start verwendet.

Das Flugzeug beschleunigt auf der Piste, bis es bei tLO abhebt. Kurz danach wird bei dem in Fig. 5 dargestellten Beispiel die erste Schaltbedingung zum Einfahren der Klappen von der Konfiguration 2 in die Konfiguration 1 bei tCC21 erreicht. Die Automatiksperre verhindert jedoch, dass das Signal zum Einfahren der Hochauftriebsklappen 21, 22 ausgeführt wird.

Bei Erreichen der Höhe Hnoreconf wird der Parameter "AUTOMATIKSPERRE" auf den Wert 0 gesetzt.

Das immer noch gültige Signal zum Einfahren der Hochauftriebsklappen 21, 22 von der Konfiguration 2 in die Konfiguration 1 wird jetzt zum Zeitpunkt tnoreconf zur automatischen Ausführung gebracht.

Unmittelbar nach Umschalten der Steuervorgabe erfolgt die kontinuierliche Prüfung der nächsten Schaltbedingung, die einen Steuerbefehl für die Konfiguration Null generiert, wenn die Geschwindigkeit auf einen Wert größer als VCC10 anwächst.

Diese Schaltbedingung wird bei tCC10 erreicht und es wird ein Signal erzeugt, welches die Hochauftriebsklappen 21, 22 in die voll eingefahrene Konfiguration 0 für den Reiseflug bringt.

Im vorliegenden Ausführungsbeispiel wird bei Überschreiten der Geschwindigkeit VSSc das Signal "START" vom Wert 1 auf den Wert 0 gesetzt. Die Geschwindigkeit VSSc ist die größere der beiden Geschwindigkeiten VCC10 bzw. VCC01,APPR, von denen letztere für das Ausfahren der Hochauftriebsklappen 21, 22 von der voll eingefahrenen in die erste ausgefahrene Konfiguration in der Anflugbetriebsart der Automatik definiert ist.

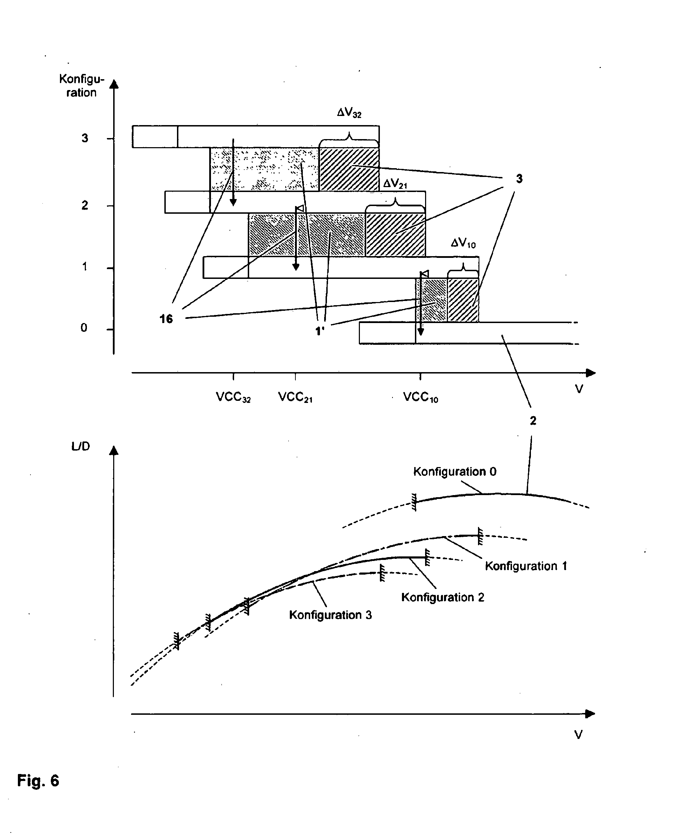

Fig. 6 zeigt in einem Diagramm ein Beispiel, wie Schaltgeschwindigkeiten VCCi+1,i (i=0,...,n-1; n - Index der höchsten Konfiguration, im vorliegenden Beispiel 3) festgelegt werden können, die zu einem möglichst hohen Verhältnis von Auftrieb L zu Widerstand D (Gleitverhältnis) während eines Start- und Steigflugverlaufs, und damit zu möglichst hohen Steiggeschwindigkeiten (im Falle eines idealisierten Propellerantriebs) bzw. Steiggradienten (im Falle eines idealisierten Turboluftstrahlantriebs) führen. Das Gleitverhältnis ist für eine gegebene Flugzeugmasse von der Geschwindigkeit als auch von der Hochauftriebs- sowie der Fahrwerkskonfiguration abhängig. Die in Fig. 6 unten gezeigten Verhältnisse verändern sich darüber hinaus mit der Flugmachzahl, jedoch in geringerem Maße. Je nach Antriebscharakteristik und gewünschtem zu optimierendem Leistungsmaß können die Schaltgeschwindigkeiten auch anhand von Kurven anderer Gütemaße als dem Gleitverhältnis festgelegt werden.

Der Pfad 2 in Fig. 6 zeigt eine günstige Kombination von Konfigurationswechselgeschwindigkeiten, d.h. der Geschwindigkeiten des Flugzeugs im Verlauf der Flugzeugbeschleunigung, bei denen zwischen den einzelnen Konfigurationen gewechselt bzw. umgeschaltet wird. Diese wird beispielhaft für die Erläuterung der Festlegung dieser Geschwindigkeiten verwendet, bei denen die Positionen der Hochauftriebsklappen 21, 22 verstellt werden. Diese Schalt- oder Konfigurationswechselgeschwindigkeiten sind so festgelegt, dass der Wechsel in die nächst kleinere Konfiguration immer dann veranlasst wird, wenn das Gleitverhältnis in der Folgekonfiguration höher ist als in der gegenwärtigen. Für die praktische Ausführung der Automatik werden geeignete Wechselgeschwindigkeiten vorzugsweise in Abhängigkeit der aktuellen Flugzeugmasse aus einer flugzeugspezifischen Wertetabelle interpoliert. Alternativ können die Daten auch abhängig von der Flugzeugmasse und der Flughöhe oder der Flugzeugmasse und der Flugmachzahl abgelegt sein. In weiteren Ausführungen wird darüber hinaus die aktuelle Fahrwerksposition berücksichtigt.

Beim hier beschriebenen Ausführungsbeispiel soll die Bedingung eingehalten werden, dass sich die Konfigurationswechselgeschwindigkeiten stets in den Überlappungsbereichen 1' befinden, die durch gemeinsame operationelle Geschwindigkeitsbänder 1 jeweils zweier benachbarter Hochauftriebskonfigurationen gebildet werden und gleichzeitig die zusätzlichen Geschwindigkeitsmargen 3 berücksichtigen.

Bei der Erstellung der Schaltgeschwindigkeitstabellen für die Automatiksteuerung werden Geschwindigkeitsmargen $\Delta Vi+1,i$ berücksichtigt die mit dem Bezugszeichen 3 gekennzeichnet sind, welche die Konfigurationswechselgeschwindigkeiten nach oben hin zusätzlich limitieren. Durch die Berücksichtigung geeignet festgelegter Geschwindigkeitsmargen 3 wird das Risiko vermindert, Maximalgeschwindigkeiten VMAXOP zu überschreiten. Solche Begrenzungen werden dann wirksam, wenn nach Flugleistungskriterien festgelegte Konfigurationswechselgeschwindigkeiten über den Grenzen liegen würden.

Die senkrechten Pfeile 16 in Fig. 6 oben kennzeichnen die Konfigurationswechselgeschwindigkeiten in der Betriebsart "START" der Automatik. Überschreitet die gemessene und tiefpassgefilterte kalibrierte Fluggeschwindigkeit die Konfigurationswechselgeschwindigkeit, bei der die Hochauftriebselemente bzw. -klappen 21, 22 in eine weiter eingefahrene Position gebracht werden sollen, so wird ein Signal erzeugt, welches das Einfahren der Hochauftriebselemente 21, 22 in die nächst niedrigere Konfiguration veranlasst. Beim hier beschriebenen Ausführungsbeispiel ist für den Startvorgang lediglich das Einfahren der Hochauftriebsklappen 21, 22 vorgesehen, jedoch nicht ein Ausfahren. Bei weiteren Ausführungsarten kann aber auch ein automatisches Wiederausfahren der Hochauftriebsklappen 21, 22 bei Unterschreitung von Konfigurationswechselgeschwindigkeiten für das Ausfahren vorgesehen werden. Diese Konfigurationswechselgeschwindigkeiten müssen ohne Betriebsartenumschaltung kleiner oder gleich den Konfigurationswechselgeschwindigkeiten für das Einfahren der Hochauftriebsklappen 21, 22 sein.

Flugzeuge haben häufig eine maximale Höhe HSF,max, bei der die Hochauftriebsklappen 21, 22 ausgefahren sein dürfen. Existiert eine solche maximale Betriebshöhe und befinden sich die Hochauftriebsklappen bei Überschreitung der Höhe in ausgefahrenem Zustand, erfolgt eine akustische und visuelle Warnung der Besatzung verbunden mit einer entsprechenden Empfehlung auf der dafür vorgesehenen Anzeigevorrichtung, die Fluggeschwindigkeit zu erhöhen, damit die Automatik das Einfahren der Klappen veranlassen kann. Während Signale für das Einfahren der Hochauftriebsklappen 21, 22 stets ausgeführt werden, unterbleibt die Generierung von Ausfahrsignalen oberhalb der maximalen Betriebshöhe HSF,max.

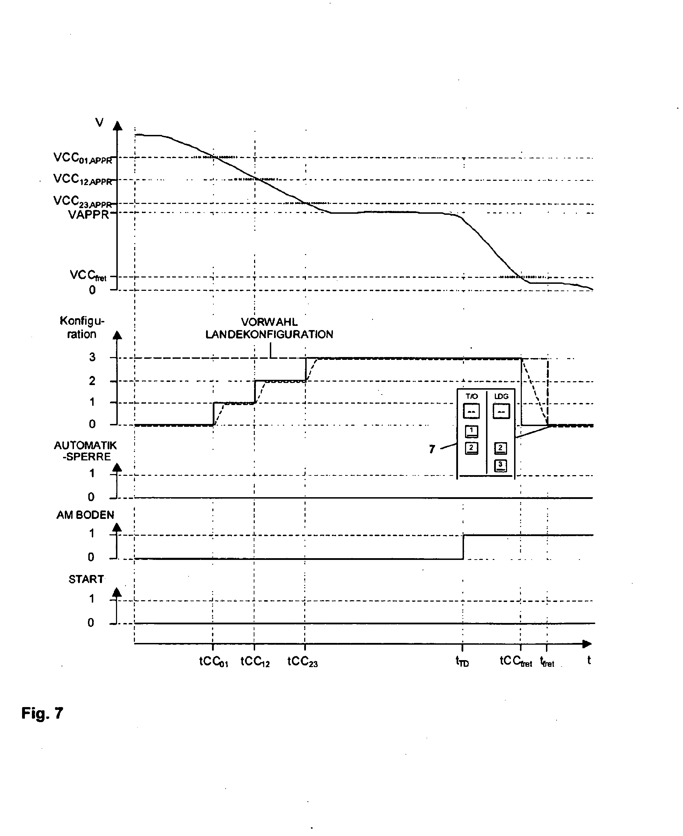

Fig. 7 zeigt analog zu Fig. 5 Diagramme mit Verläufen von Parametern, die für die beschriebene Hochauftriebsautomatik von Bedeutung sind, mit dem Unterschied, dass hier die Betriebsphasen Anflug und Landung sowie der Bodenbetrieb nach der Landung betrachtet werden.

Nach dem Sinkflug von der Reiseflughöhe mit einer Geschwindigkeit größer als der Konfigurationswechselgeschwindigkeit VCC01,APPR wird das Flugzeug verzögert, was sowohl in einem Anflugsegment mit konstanter Höhe als auch in einem leichten Sinkflug erfolgen kann. Bei Unterschreitung von VCC01,APPR bei tCC01 folgt ein Signal zum Ausfahren der Hochauftriebsklappen 21, 22 von der Konfiguration 0, der Reiseflugstellung, in die erste ausgefahrene Konfiguration 1. Weiteres Verzögern des Flugzeugs führt sukzessive zum Unterschreiten der Konfigurationswechselgeschwindigkeiten VCC12,APPR und VCC23,APPR, die zum Ausfahren der Hochauftriebsklappen 21, 22 bis in die vorgewählte Landekonfiguration 3 führen. Der Anflug wird dann mit konstanter Konfiguration und Anfluggeschwindigkeit VAPPR weiter fortgeführt bis zum Abfangen und Aufsetzen am Boden bei tTD, wobei das bereits weiter oben beschriebene Signal "AM BODEN" vom Wert 0 auf den Wert 1 gesetzt wird.

Verringert sich die Geschwindigkeit des Flugzeugs unter VCCfret, werden die Klappen 21, 22 vollständig eingefahren. Ein akustisches Signal und eine Textanzeige auf der dafür vorgesehenen Anzeigevorrichtung des Cockpits informieren die Cockpitbesatzung, dass die Klappen jetzt automatisch vollständig eingefahren werden und die Durchführung eines regulären Durchstartmanövers ohne neuerliche Eingabe der Startkonfiguration nicht mehr möglich ist. In einer weiteren Ausführungsvariante kann diese Bedingung auch unter Verwendung der wahren Geschwindigkeit des Flugzeugs gegenüber einer erdfesten Referenz erfolgen. Wenn die Hochauftriebsklappen 21, 22 vollständig eingefahren sind, wird zum Zeitpunkt tfret ein entsprechendes Signal erzeugt und der Wert für die Steuervorwahl für den Anflug gelöscht.

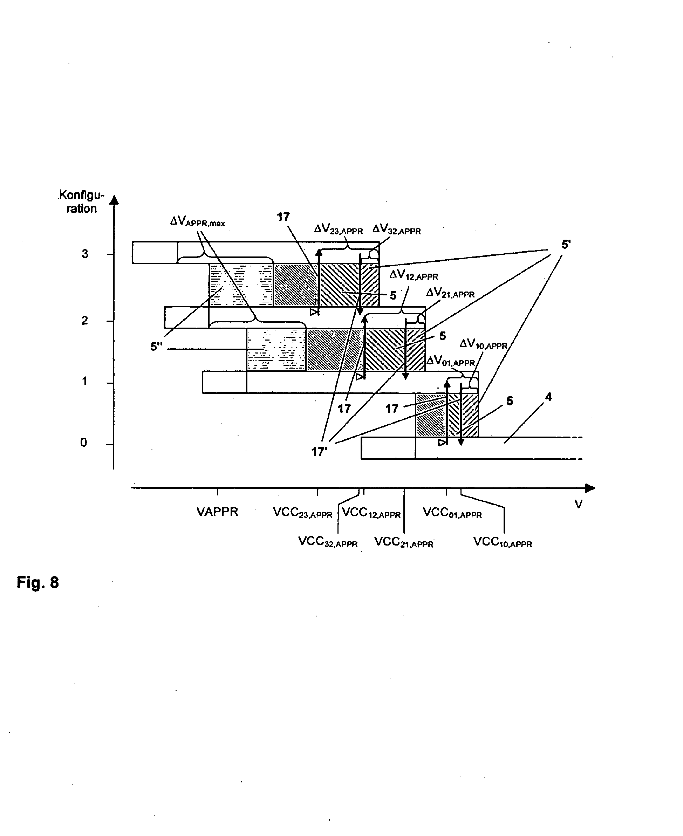

Die für den Anflugmodus geltenden Arbeitskurven sind in Fig. 8 dargestellt. Die Funktionsweise wird anhand des dargestellten Geschwindigkeitspfades 4 erläutert, der dem Teil des in Fig. 7 gezeigten zeitlichen Verlaufs eines Anflugs bis zum Erreichen von VAPPR widerspiegelt. Die Konfigurationswechselgeschwindigkeiten 17 sind im gezeigten Ausführungsbeispiel über individuelle Differenzgeschwindigkeiten $\square Vi,i+1,APPR$ (i=0, ..., n-1), die sich aus der Summe der mit den Bezugszeichen 5 und 5' gekennzeichneten Bereiche ergeben, bezüglich der Obergrenzen VMAXOPi+1 festgelegt. Diese Differenzgeschwindigkeiten sind flugzeug- und konfigurationsspezifisch gewählt.

Der Spielraum zu den Obergrenzen der Konfigurationen mit dem jeweiligen nächst höheren Index gewährleistet, dass ein ausreichender Abstand zu den Schaltgeschwindigkeiten 17' eingehalten wird, bei deren Überschreitung das stufenweise Einfahren der Hinter- und/oder Vorderkantenklappen 21, 22 veranlasst wird. Diese Einfahrfunktionalität vereint bereits bekannte Schutzfunktionen, die das Risiko des Auftretens unzulässig hoher Lasten an den Klappen durch Zurückfahren des Klappenausschlags verringern mit der operationellen Notwendigkeit, dass in der Anflugbetriebsart, d.h. "START" = 0, die Konfigurationen auch ohne Überschreitung der maximalen Betriebsgeschwindigkeiten VMAXOP verringert werden können. Die Geschwindigkeitsmargen, die diese Schaltgeschwindigkeiten ebenfalls in Bezug zu den maximalen Betriebsgeschwindigkeiten definieren, sind in Fig. 8 mit $\square Vi+1,i,APPR$ bezeichnet und durch das Bezugszeichen 5' gekennzeichnet. Da die Anzahl der Fälle bei denen die Einfahrfunktionalität zum Einsatz kommt als gering zu erwarten ist, sind die Margen 5' zu den maximalen Betriebsgeschwindigkeiten vorzugsweise klein.

Die Konfigurationswechselgeschwindigkeiten 17 bzw. die Werte $\square Vi,i+1,APPR$ sind darüber hinaus so festgelegt, dass ein Unterschreiten von VMINOP unter Voraussetzung der für die jeweiligen Konfigurationen typischen Verzögerungsraten sowie dem Einfluss von Böen unwahrscheinlich ist aber dennoch ein ausreichender Hystereseabstand 5 zu den Einfahrgeschwindigkeiten der Anflugbetriebsart gewährleistet ist. Aufgrund des starken Einflusses des Fahrwerks auf den Widerstand ist es sinnvoll, die Fahrwerksposition für die Festlegung dieser Werte zu berücksichtigen.

Liegen die Konfigurationswechselgeschwindigkeiten eher im oberen Bereich des Geschwindigkeitsbandes 1, so erhöht sich nicht nur die Konfiguration bereits bei verhältnismäßig hohen Geschwindigkeiten, sondern der Widerstand ist im Mittel eines Anflugs hoch, was durchaus gewünscht sein kann, um die Verzögerung des Flugzeugs auf die Anfluggeschwindigkeit zu unterstützen.

In weiteren Ausführungsformen kann auch eine Festlegung der Konfigurationswechselgeschwindigkeiten 17 nach Flugleistungsgesichtspunkten erfolgen, wie sie für die Festlegung der Schaltgeschwindigkeiten 16 für die Startbetriebsart der Automatik bereits diskutiert wurden. Hierdurch ließen sich besonders widerstands- und damit kraftstoffverbrauchsarme bzw. lärmarme Anflüge realisieren.

Welchem der beiden zuletzt geschilderten Ansätze schließlich der Vorzug zu geben ist, hängt in erster Linie vom Anflugverfahren ab, d. h. von den gewählten Anflughilfen und der Bahnführung, gekennzeichnet durch das zu erfliegende Höhen- und Geschwindigkeitsprofil.

Die Konfigurationswechselgeschwindigkeit, die die Hochauftriebselemente 21, 22 in die für die Landung vorgesehene Konfiguration bringt, muss darüber hinaus größer sein als die minimale operationelle Geschwindigkeit der Konfiguration, in die gewechselt wird, zuzüglich einer Geschwindigkeitsmarge 5". Die Größe dieser Geschwindigkeitsmarge □VAPPR,max ergibt sich aus flugzeugspezifisch erforderlichen Zuschlägen für Wind und Turbulenz zur Referenzgeschwindigkeit für den Endanflug. Durch diese Regel wird vermieden, dass die Konfigurationswechselgeschwindigkeit, die den Wechsel in die Landekonfiguration bewirkt, geringer ist als die Anfluggeschwindigkeit VAPPR.

Abhängig von der Flugzeugmasse und den Geschwindigkeitsanforderungen im Warteflug kann es erforderlich sein, dass die Hochauftriebsklappen 21, 22 im Warteflug ausgefahren werden müssen. Eine eigens für den Warteflug definierte Betriebsart ist im vorliegenden Ausführungsbeispiel nicht vorgesehen. Stattdessen erfolgt das geschwindigkeitsabhängige Ausfahren der Hochauftriebsklappen gemäß Fig. 8 in der Anflugbetriebsart. Bei Unterschreitung von VCC01,APPR fahren die Hochauftriebsklappen 21, 22 von dem eingefahrenen Zustand 0 in die nächstgelegene ausgefahrene Stellung 1. Ohne die Erfordernis eines Betriebsartenwechsels werden die Hochauftriebsklappen wieder in die Konfiguration Null zurückgefahren, wenn die Schaltgeschwindigkeit VCC10,APPR überschritten wird.

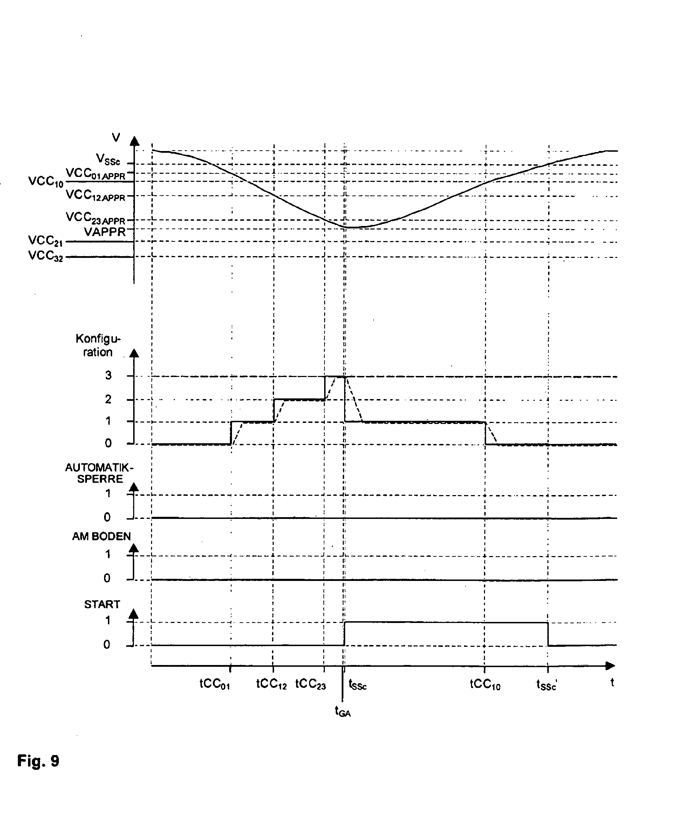

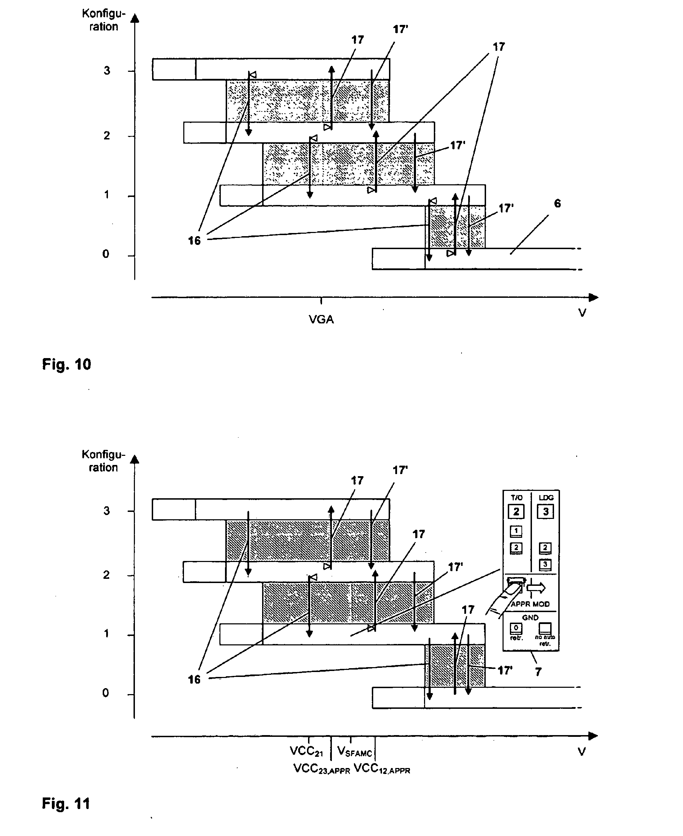

Im folgenden soll die Funktionsweise der Automatik beim Übergang aus dem Anflug in die Durchstartphase anhand der in Fig. 9 gezeigten Zeitverläufe erläutert werden. Wird der Schub auf einen für das Durchstarten vorgesehenen Wert erhöht, was in Fig. 9 zum Zeitpunkt tGA erfolgt, so wird ein Signal für das Durchstarten gesetzt. In anderen Ausführungsbeispielen kann das Setzen des Durchstartsignals von weiteren Bedingungen abhängig sein, wie der, dass zusätzlich eine positive Steigrate vorliegen muss oder dass sich die Hochauftriebsklappen 21, 22 zumindest in der ersten ausgefahrenen Konfiguration befinden müssen. Fig. 10 zeigt den Pfad 6 der Geschwindigkeit während des Manövers zusammen mit den Schaltgeschwindigkeiten. Sobald das Durchstartsignal vorliegt, erfolgt die Umschaltung der Betriebsart der Klappenautomatik von Anflug auf Start (Zeitpunkt tSSc in Fig. 9), wobei der Parameter "START" von 0 auf 1 gesetzt wird. Da im vorliegenden Beispiel die aktuelle Geschwindigkeit V zu diesem Zeitpunkt höher ist als VCC32 und VCC21, wird ein Signal erzeugt, das dazu führt, dass die Hochauftriebsklappen 21, 22 in die Konfiguration 1 eingefahren werden. Beschleunigt das Flugzeug auf eine Geschwindigkeit größer gleich VCC10, so werden die Klappen beginnend bei tCC10 vollständig eingefahren. Bei Überschreitung von VSSc zum Zeitpunkt tSSc' erfolgt schließlich eine Umschaltung von der Betriebsart Start zurück in die Betriebsart Anflug.

Der geschilderte Ablauf ist entsprechend auch für den Fall anwendbar, bei dem das Flugzeug bereits am Boden aufgesetzt hat und die Geschwindigkeit nicht unter VCCfret gefallen ist.

In dem besonderen Fall, dass das Flugzeug kurz nach dem Start in den Anflug übergeht und das Flugzeug noch nicht auf eine Geschwindigkeit größer oder gleich VSSc beschleunigt hat, muss der Pilot den Wechsel von der Betriebsart Start in die Betriebsart Anflug der Automatik manuell durch Betätigung der Taste 19 herbeiführen. In weiteren Ausführungen der automatischen Steuerung des Hochauftriebssystems kann ggfs. auf diese manuelle Eingabe verzichtet werden, wenn neben der geschwindigkeitsgesteuerten automatischen Umschaltung eine

alternative Bedingung hinzugefügt wird, die z. B. das Unterschreiten eines vordefinierten Schwellwerts durch die tiefpassgefilterte Steigrate sein kann.

In dem in Fig. 11 dargestellten Diagramm erfolgt die Umschaltung an einem Punkt, der durch die Fluggeschwindigkeit VSFAMC gekennzeichnet ist. Das Flugzeug befindet sich dabei zunächst in der Konfiguration 1. Da die aktuelle Geschwindigkeit aber kleiner als die Konfigurationswechselgeschwindigkeit VCC12,APPR ist, erfolgt unmittelbar nach der Umschaltung ein Signal zum Ausfahren der Hochauftriebsklappen in die Konfiguration 2. Damit die Besatzung einschätzen kann, ob und wenn ja, um wie viele Stufen die Hochauftriebselemente 21, 22 nach Betätigung der Umschalttaste 19 ausfahren, wird das bei der aktuellen Geschwindigkeit zu erwartende Klappenstellkommando in der Anflugbetriebsart der Automatik dem oder den Piloten auf einer Anzeigevorrichtung angezeigt.

Entsprechend dem normalen Verhalten in der Anflugbetriebsart wird bei weiterer Verzögerung und Unterschreiten von VCC23,APPR in die Konfiguration 3 gewechselt, wenn diese Konfiguration als Landekonfiguration vorgewählt wurde. Sollte keine Landekonfiguration vorgewählt worden sein, so fahren die Hochauftriebselemente 21, 22 dennoch bei Unterschreitung von VCC23,APPR in die Konfiguration 3, wenn diese als Basiseinstellung vorgesehen ist, wovon im vorliegenden Ausführungsbeispiel ausgegangen wird.

Wird die Entscheidung zur Landung revidiert, so kann der Wechsel von der Anflugbetriebsart zurück in die Startbetriebsart entsprechend dem zuvor für das Durchstarten geschilderten Prozess erfolgen.

Da eine Implementierung der automatischen Steuerung des Hochauftriebssystems sowohl in eine Analog- als auch in eine Digitalrechnerarchitektur erfolgen kann, werden die Bezeichnungen Signal und Parameter im folgenden als synonyme Begriffe verwendet. Die automatische Steuerung kann sowohl als software- als auch als hardwaremäßiges Modul der Gesamtsteuerung vorgesehen sein. Die automatische Steuerung wird gemäß dem Ausführungsbeispiel aber vorzugsweise in Form eines Softwareprogramms in die angenommene Digitalrechnerarchitektur der Klappensteuerungseinheit 26 implementiert.

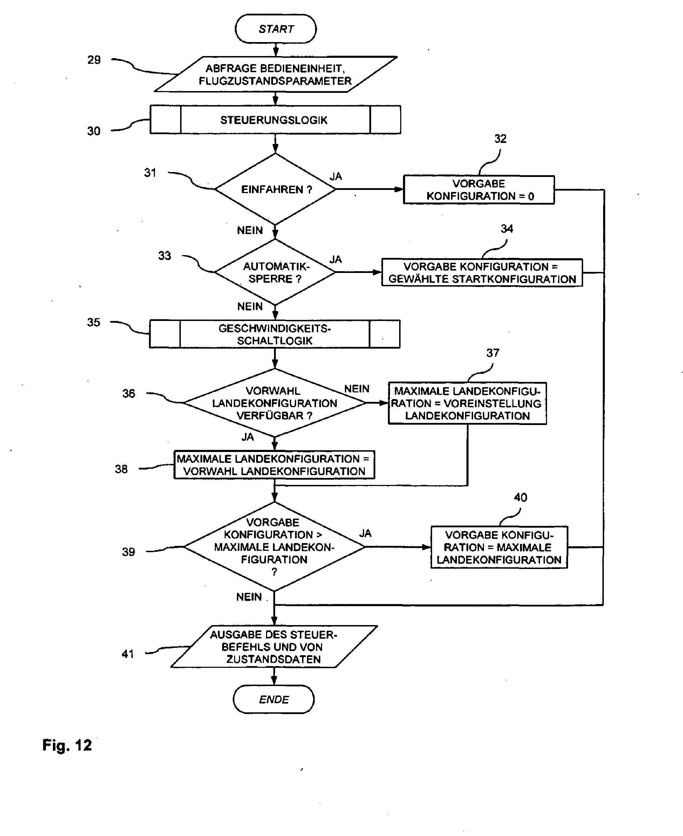

Ein vereinfachtes Ablaufschema eines solchen Programms ist in Fig. 12 dargestellt. Das Programm ist in eine Echtzeitumgebung eingebettet und wird in bestimmten Zeitabständen mehrmals pro Sekunde wiederholt aufgerufen.

Zunächst werden in Block 29 der Zustand der Bedieneinheit 7 und die für die Schaltlogik erforderlichen Flugzustandsparameter aus der mit dem Bezugszeichen 27 gekennzeichneten Einheit abgefragt. In der Steuerungslogik 30 werden die Zustände der Steuerparameter ermittelt, die das Verhalten der Klappenautomatik beeinflussen. In der Folge wird an der Verzweigungsstelle 31 abgefragt, ob das Signal zum vollständigen Einfahren der Klappen am Boden vorliegt oder nicht. Im ersteren Fall wird der Steuerbefehl "VORGABE KONFIGURATION" in Block 32 auf den Wert 0 gesetzt. Im zweiten Fall wird an der Verzweigungsstelle 33 abgefragt, ob das Signal "AUTOMATIKSPERRE" den Wert 1 besitzt. Ist dies der Fall, so wird der Steuerbefehl "VORGABE KONFIGURATION" im Programmschritt mit dem Bezugszeichen 34 auf den manuell vorgewählten Wert für die Startkonfiguration gesetzt. Ist das Ergebnis von Block 33 logisch falsch, gekennzeichnet durch den Ausgang "NEIN", wird die Geschwindigkeitsschaltlogik 35 aufgerufen, die einen neuen Wert für den Steuerbefehl "VORGABE KONFIGURATION" in Abhängigkeit des beim Aufruf vorliegenden Wertes dieses Parameters, der Flugzeugmasse, der momentanen Betriebsart, der kalibrierten Fluggeschwindigkeit V und der auf die Standarddruckfläche bezogenen Höhe erzeugt. In der Verzweigung 36 wird geprüft ob ein gültiger Wert "VORWAHL LANDEKONFIGURATION" verfügbar ist, d. h. eine Konfiguration, die manuell über die Schalter 12 der Bedieneinheit 7 gewählt wurde. Ist das der Fall, wird der Parameter "MAXIMALE LANDEKONFIGURATION" in Block 38 auf den Wert "VORWAHL LANDEKONFIGURATION" gesetzt. Ist kein Vorwahlwert verfügbar, so wird der mit "NEIN" gekennzeichnete Programmablaufpfad ausgehend von der Verzweigung 36 beschritten und in Block 37 der Parameter "MAXIMALE LANDEKONFIGURATION" auf den Wert der Basiseinstellung für die Landekonfiguration gesetzt. Durch die Verzweigung 39 im weiteren Programmablauf wird sichergestellt, dass das Ergebnis des Blocks 35 nicht größer ist als die maximale Landekonfiguration. Liegt der Vorgabewert für die Konfiguration über dem Maximalwert für die Landekonfiguration, so wird der Steuerbefehl "VORGABE KONFIGURATION" im Block mit dem Bezugszeichen 40 auf den Maximalwert für die Landekonfiguration begrenzt. Der Steuerbefehl wird in Block 41 zur Ausführung der Verstellung der Hochauftriebsklappen 21, 22 übermittelt. Weiterhin werden Zustandsparameter der Steuerung zum Zwecke der Anzeige ausgegeben und eine Rückmeldung an die Bedieneinheit generiert.

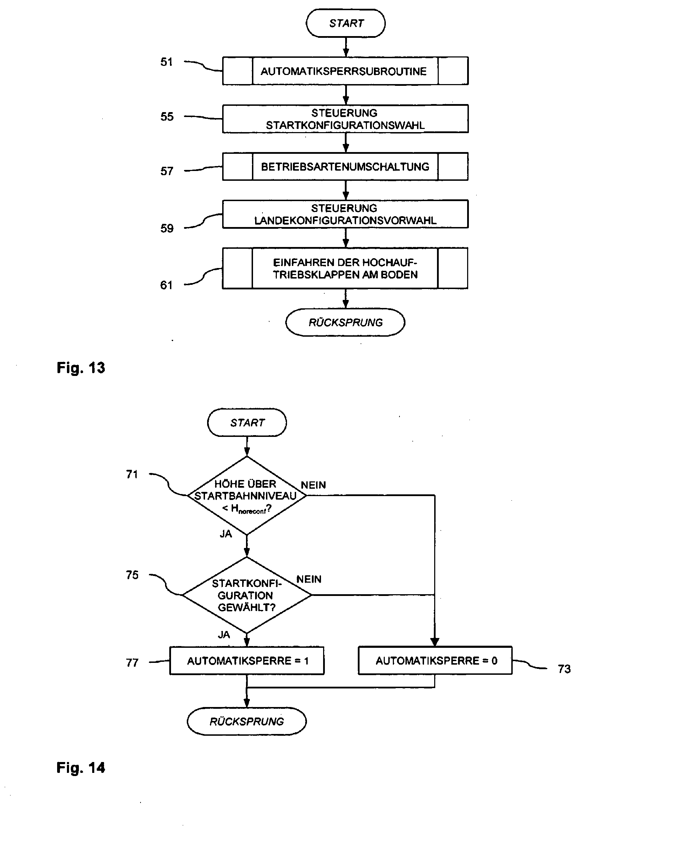

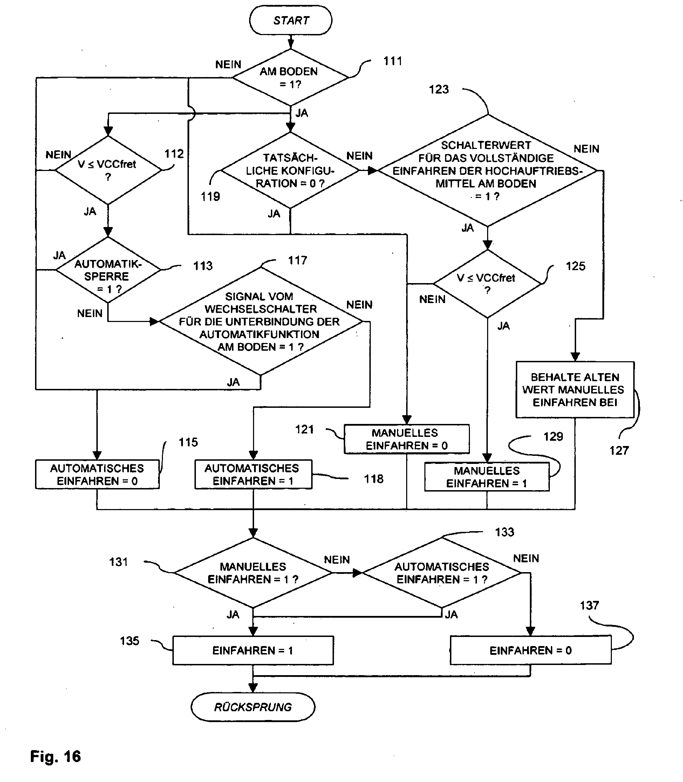

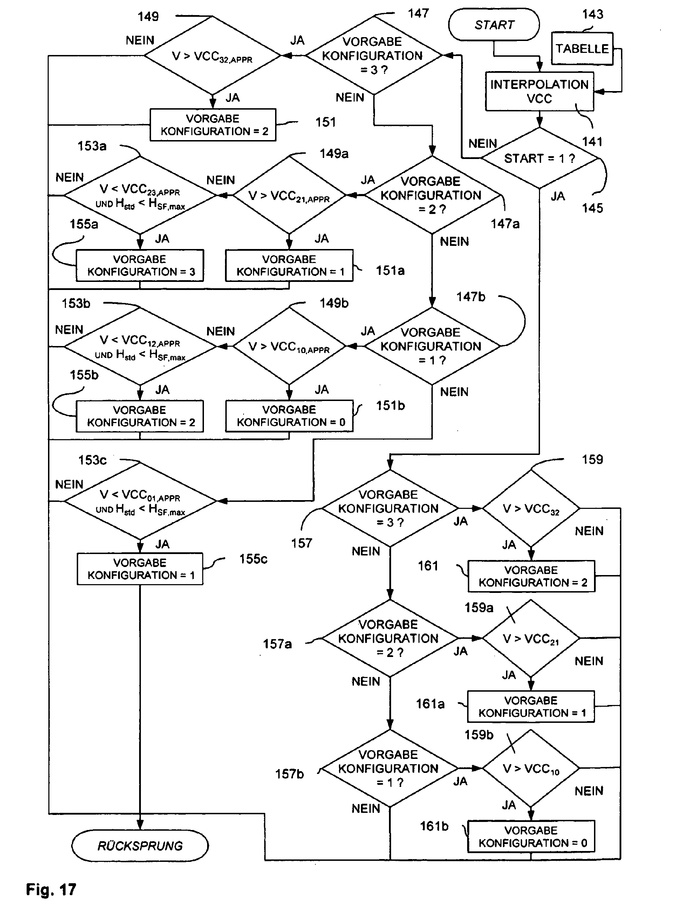

Fig. 13 zeigt ein vereinfachtes Programmablaufdiagramm der Steuerungslogik, deren Aufruf im Hauptprogramm (Fig. 12) mit dem Bezugszeichen 30 gekennzeichnet ist. Die Steuerungslogik ruft ihrerseits sequenziell weitere Unterprogramme bzw. Prozessschritte auf. In der Reihenfolge der Abbildung ist das unter dem Bezugszeichen 51 der Aufruf einer Subroutine für die Generierung des Signals "AUTOMATIKSPERRE" (Fig. 14), welches in der Verzweigungsstelle 33 des Hauptprogramms benötigt wird. Der Block mit dem Bezugszeichen 55, fasst die Prozesse zusammen, die zum einen für die Löschung des gewählten Startkonfigurationswertes nach dem Start erforderlich sind und zum anderen dafür sorgen, dass eine Betätigung der Schalter 11 zu einem Zeitpunkt an dem die Betätigung weder vorgesehen noch erforderlich ist zu einem ungewünschten Verhalten der Hochauftriebsautomatik führt. Das Ergebnis der Subroutine zur Betriebsartenumschaltung (Fig. 16), deren Aufruf unter dem Bezugszeichen 57 erfolgt, ist das Signal "START", welches für die Generierung der Steuervorgabe für die Hochauftriebsklappen 21, 22 in der unter dem Bezugszeichen 35 aus dem Hauptprogramm (Fig. 12) aufgerufenen Subroutine benötigt wird, die die Geschwindigkeitslogik enthält (Fig. 17). Der folgende Block 59 umfasst die Prozesse zum Beibehalten oder Löschen der Landekonfigurationsvorgabe. Abschließend folgt unter dem Bezugszeichen 61 der Aufruf einer Subroutine (Fig. 16), die ein Signal generieren kann, welches das Einfahren der Hochauftriebselemente 21, 22 am Boden steuert und in der Verzweigungsstelle mit dem Bezugszeichen 31 des Hauptprogramms (Fig. 12) verwendet wird.

Ein Programmablaufdiagramm für das Unterprogramm "AUTOMATIKSPERR-SUBROUTINE" zur Auswertung der Automatiksperre ist in Fig. 14 dargestellt. Im Verzweigungspunkt 71 wird geprüft, ob sich das Flugzeug noch unterhalb einer gewissen Höhe Hnoreconf befindet. In dem Fall, dass die Abfrage der Verzweigung 71 mit "JA" beantwortet wird, erfolgt eine weitere Abfrage bei der Verzweigung 75, ob eine gültige Startkonfiguration gewählt wurde. Ist dies der Fall, so wird der Parameter bzw. das Signal "AUTOMATIKSPERRE" in dem mit dem Bezugszeichen 77 gekennzeichneten Block auf den Wert eins, oder logisch wahr gesetzt. Wird eine der beiden Abfragen 71 bzw. 75 mit "NEIN" beantwortet, so wird das Signal "AUTOMATIKSPERRE" im Prozessschritt 73 auf den Wert Null gesetzt, was logisch falsch entspricht.

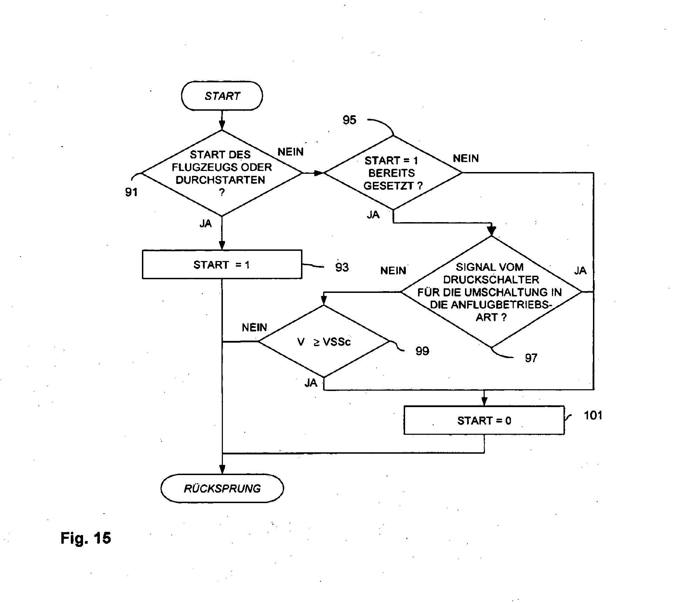

Die Subroutine "BETRIEBSARTENUMSCHALTUNG" ist in Fig. 15 dargestellt. Ein Modul 91 stellt fest, ob ein Signal für das Durchstarten gesetzt ist. Ist das der Fall, so wird in Block 93 der Parameter "START' auf den Wert eins gesetzt. Liegt am Eingang von Modul 91 kein Signal für das Durchstarten vor, so erfolgt die Verzweigung zur Abfrage 95, worin festgestellt wird, ob der Parameter "START" bereits den Wert eins besitzt. Ist das der Fall, so wird in Block 97 geprüft, ob ein Signal vom Druckschalter für die Umschaltung in die Anflugbetriebsart 19 vorliegt. Ist auch dies nicht der Fall erfolgt als letztes in 99 die Prüfung ob die aktuelle Fluggeschwindigkeit die Geschwindigkeit für die automatische Betriebsartenumschaltung VSSc bereits erreicht oder überschritten hat. Befindet sich die Automatik also in der Betriebsart "START", liegt kein Signal des Schalters 19 vor und wurde die Geschwindigkeit VSSc noch nicht erreicht, so erfolgt der Rücksprung in die aufrufende Routine ohne, dass der Wert des Parameters "STAR" verändert wurde. Der Wert "START" kann in Block 101 auf Null gesetzt werden, was bedeutet, dass sich die automatische Steuerung des Hochauftriebssystems in der für den Anflug vorgesehenen Betriebsart befindet bzw. in diese Betriebsart wechselt. Dies geschieht dann, wenn der Programmablauf nach der Abfrage an Block 95 dem mit "NEIN" gekennzeichneten Zweig folgt bzw. den am Ausgang von Verzweigung 97 oder 99 mit "JA" gekennzeichneten Zweigen.

Fig. 16 zeigt ein Ablaufschema für eine Subroutine, die das Einfahren der Hochauftriebsklappen 21, 22 am Boden steuert. Zunächst wird in Block 111 in Abhängigkeit des Signals "AM BODEN" verzweigt. Befindet sich das Flugzeug nicht am Boden, werden die Parameter "AUTOMATISCHES EINFAHREN" in Block 115 und "MANUELLES EINFAHREN" in Block 121 auf NULL gesetzt. Im anderen Fall folgt der Programmablauf in einem ersten Zweig, in dem die Bedingungen für das Setzen eines Signals für das automatische Einfahren der Hochauftriebsklappen am Boden geprüft werden und der mit der Verzweigung 112 beginnt sowie in einem zweiten Zweig, der die Bedingungen für das manuelle Einfahren der Klappen am Boden prüft und mit der Verzweigung 119 beginnt. Der Zweig zur automatischen Steuerung beginnt mit der Abfrage in Block 112, ob die Geschwindigkeit V kleiner oder gleich der für das Einfahren vorgesehenen Höchstgeschwindigkeit VCCfret ist. Wenn ja, so wird in 113 weiter abgefragt, ob der Wert für den Parameter "AUTOMATIKSPERRE" eins ist. Wenn dies nicht der Fall ist und kein Signal des Wechselschalters für die Unterbindung der Automatikfunktion am Boden 14 in Verzweigung 117 vorliegt, wird der Parameter "AUTOMATISCHES EINFAHREN" in Block 118 auf den Wert eins gesetzt. Ist der Wechselschalter 14 gedrückt und das dem entsprechende Signal eins, so soll das automatische Einfahren der Hochauftriebshilfen am Boden unterbleiben und der Parameter "AUTOMATISCHES EINFAHREN" wird im Block mit dem Bezugszeichen 115 auf Null gesetzt. Der gleiche Ausführungsschritt 115 erfolgt, wenn die Prüfung der Schaltbedingung in den Verzweigungspunkten 111 oder 112 "NEIN" ergibt, das Flugzeug sich also entweder in der Luft befindet oder die Geschwindigkeit am Boden noch hoch ist. Ist beides nicht der Fall, das Signal "AUTOMATIKSPERRE" aber auf eins gesetzt, was zu einer positiven Beantwortung der Abfrage in Block 113 führt, erfolgt ebenfalls die Ausführung von 115. In letzterem Fall befindet sich das Flugzeug also in der Phase der Startvorbereitung oder des Startrollvorgangs.

Parallel wird ein weiterer Verarbeitungszweig verfolgt, der mit der Abfrage 119 beginnt, ob die Hochauftriebsklappen 21, 22 sich bereits in der voll eingefahrenen Position befinden. Ist dies der Fall, so wird in dem mit 121 gekennzeichneten Block der Parameter "MANUELLES EINFAHREN" auf Null gesetzt. Einem negativen Ergebnis der Abfrage 119 folgt im Block 123 die Abfrage des Schalterwerts 13 für das vollständige Einfahren der Hochauftriebsklappen am Boden und die Weiterverzweigung zum Block 125 im positivem Fall. Ist die aktuelle Geschwindigkeit des Flugzeugs V kleiner oder gleich VCCfret, so wird der Parameter "MANUELLES EINFAHREN" in Block 129 auf den Wert eins gesetzt. Bei hoher Geschwindigkeit im anderen Fall verzweigt 125 zum Block 121 und der Parameter "MANUELLES EINFAHREN" erhält den Wert Null. Ist der Schalter 13 nicht gedrückt und das Signal folglich Null, so erfolgt die Verzweigung aus 123 zum Block 127, der kennzeichnet, dass der zu Beginn der Subroutine vorliegende Wert des Parameters "MANUELLES EINFAHREN" beibehalten wird. Die weitere Ausführung des Unterprogramms erfolgt mit der Prüfung des Parameters "MANUELLES EINFAHREN" an der Verzweigungsstelle 131. Sollen die Klappen eingefahren werden, so wird das Signal "EINFAHREN" im Block 135 auf den Wert eins gesetzt. Liegt kein Signal für das manuelle Einfahren vor, erfolgt in 133 die Prüfung, ob das Signal zum automatischen Einfahren der Hochauftriebsklappen 21, 22 gesetzt ist und entsprechend dem Wahrheitswert erfolgt eine Verzweigung zum Block 135 oder für den Fall, dass die Hochauftriebsklappen 21, 22 nicht eingefahren werden sollen, zum Block 137.

Ein ganz wesentliches Element der Erfindung ist die Geschwindigkeitsschaltlogik, für die ein Programmablaufdiagramm in Fig. 17 abgebildet ist. Nach dem Start der Subroutine werden zunächst im Modul 141 die Konfigurationswechselgeschwindigkeiten VCC in Abhängigkeit der aktuellen Flugzeugmasse aus einer Tabelle 143 mit Hilfe einer Interpolationsroutine ermittelt.

Befindet sich die automatische Steuerung des Hochauftriebssystems in der Betriebsart "START", so wird der Programmablauf in der Verzweigung 145 auf den entsprechenden mit "JA" gekennzeichneten Zweig geleitet. Besitzt der Steuerbefehl für die Konfiguration "VORGABE KONFIGURATION" den Wert 3, so wird der Programmablauf in der Verzweigung 157 zur Prüfung der Geschwindigkeitsschaltbedingung im Verzweigungsblock 159 weitergeleitet. Die Verfolgung dieses Zweiges ist nur im Durchstartfall von Relevanz, da die Konfiguration 3 im vorliegenden Ausführungsbeispiel nicht für den Start vorgesehen ist. Ist die Geschwindigkeit V größer als die Konfigurationswechselgeschwindigkeit VCC32, so wird der Wert "VORGABE KONFIGURATION" in dem mit dem Bezugszeichen 161 gekennzeichneten Block auf den Wert 2 gesetzt, die Hochauftriebsklappen 21, 22 sollen also um eine Konfigurationsstufe eingefahren werden. Ist das nicht der Fall, so wird der vorliegende Wert 3 des Steuerbefehls "VORGABE KONFIGURATION" beibehalten und es erfolgt der Rücksprung ins Hauptprogramm. Analog erfolgen die Abfragen der Eingangskonfigurationsvorgaben 2 und 1 unter den Bezugszeichen 157a, bzw. 157b mit einer ganz analogen Prüfung der Geschwindigkeitsschaltbedingungen in 159a, bzw. 159b und ggfs. das Setzen von neuen, geänderten Vorgaben in 161a, bzw. 161b. Da in der Startbetriebsart das Erhöhen der Konfiguration nicht vorgesehen ist, entfällt eine Verzweigung für die Konfiguration 0.

Befindet sich die automatische Steuerung des Hochauftriebssystems nicht in der Startbetriebsart, sondern in der Anflugbetriebsart ("START" = 0), so wird der Programmablauf in der Verzweigung 145 auf den mit "NEIN" gekennzeichneten Zweig geleitet. Analog zur Abfrage in Block 157 erfolgt auch die Prüfung in der Verzweigung 147 ob der Parameter "VORGABE KONFIGURATION" den Wert 3 besitzt. Bei positivem Ergebnis und wenn die Geschwindigkeit größer ist als die Konfigurationswechselgeschwindigkeit VCC32,APPR für das Einfahren der Hochauftriebsklappen 21, 22 von der Vorgabe für die am weitesten ausgefahrene Konfiguration 3 in die Konfiguration 2, was in dem mit dem Bezugszeichen 149 gekennzeichneten Verzweigungsblock geprüft wird, erfolgt in Block 151 das Setzen des Parameters "VORGABE KONFIGURATION" auf den Wert 2. Im Falle, dass "VORGABE KONFIGURATION" den Wert 2 bereits bei Start der Subroutine hatte, wird der Programmablauf an der Verzweigungsstelle 147a zur Verzweigung 149a geleitet. Dort erfolgt eine Prüfung analog zu 149. Für den Fall, dass die aktuelle Fluggeschwindigkeit V nicht größer ist als VCC21,APPR, was das Einfahren der Hochauftriebsklappen 21, 22 durch Setzen des Parameters "VORGABE KONFIGURATION" auf 1 in Block 151a bewirken würde, folgt in Block 153a eine Prüfung ob V kleiner ist als VCC23,APPR und weiterhin, ob die aktuelle Höhe kleiner als die maximale Betriebshöhe des Flugzeugs mit ausgefahrenen Hochauftriebsklappen 21, 22 ist. Liefern beide Bedingungen ein logisch wahres Ergebnis wird der Block 155a aufgerufen und "VORGABE KONFIGURATION" auf den Wert 3 setzt.

Die weiteren Programmschritte der Abfragekaskade unter dem Bezugszeichen 147b erfolgt analog zu 147 und 147a, die Verzweigung 149b ist analog zu 149 und 149a formuliert, die Abfragen 153b und 153c analog zu 153a, der Programmschritt 151b analog zu 151 und 151a sowie die Schritte 155b und 155c analog zu 155a. In jedem Fall folgt abschließend der Rücksprung ins Hauptprogramm.

Durch die Reduzierung der erforderlichen Piloteneingaben beim oben beschriebenen Verfahren zur automatischen Steuerung von Hochauftriebssystemen wird das Risiko von manuellen Fehlbedienungen - auch durch Unterlassen - reduziert. Geeignete Start- bzw. Landekonfigurationen für die Hochauftriebshilfen werden in der üblichen, bekannten Weise abhängig von der Startleistungsrechnung für die Startbahn sowie abhängig von der Landeleistungsrechnung für die geplante Landebahn am Ziel ermittelt. Diese beiden Konfigurationen werden vor dem Start manuell über die Bedieneinheit 7 eingegeben. Während das Steuersignal für die Startkonfiguration unmittelbar umgesetzt wird, wird die Landevorwahl abgespeichert. Lediglich in wenigen Fällen wird eine Revision der Landekonfigurationsvorwahl bei der Anflugvorbereitung aufgrund geänderter Randbedingungen erforderlich sein, was etwa durch einen Wechsel der Landebahn oder eine Änderung des Windes begründet sein kann. Für den Normalbetrieb eines Verkehrs- oder Transportflugzeugs ist die Besatzung während des Flugs bis auf die genannte Ausnahme vollständig von der manuellen Bedienung des Hochauftriebssystems des Flugzeugs entlastet.

Vorteilhaft an der vorliegenden Erfindung ist auch, dass besondere Fälle beim Betrieb eines Flugzeugs berücksichtigt werden, die die Steuerung des Hochauftriebssystems betreffen. Insbesondere ist hier die explizite Berücksichtigung des Durchstartfalls zu nennen, für die bisher kein vollautomatischer Prozess beschrieben wurde. Da in diesem Fall grundsätzlich von einer erhöhten Arbeitsbelastung der Cockpitbesatzung auszugehen ist, wird durch die erfindungsgemäße Automatik eine signifikante Entlastung erreicht, was ebenfalls zu einer Erhöhung der Flugsicherheit führt.

Die Differenzierung zwischen verschiedenen Arbeitskurven für Abflug und Anflug ermöglicht eine erheblich bessere Annäherung an Flugleistungsoptima als eine gemeinsame Arbeitskurve es ermöglichen würde. Darüber hinaus bietet die flugphasenabhängige Umschaltung der Betriebsarten das Potential einer verbesserten Betriebsruhe, da abwechselnde Steuersignale zum Ein- und Ausfahren der Klappen weitgehend vermieden werden, wie sie im Falle transienter Fluktuationen der Fluggeschwindigkeit um eine einzelne Schaltbedingung für das Ein- und Ausfahren der Klappen herum auftreten können. Die Kriterien für die Umschaltung der Betriebsarten selbst sind so formuliert, dass schnell alternierende Wechsel der Kommandos ausgeschlossen sind. Nichtsdestotrotz weist das System für den Regelbetrieb keine Verzögerungselemente auf, so dass die Konfigurationsänderung unmittelbar bei Eintreten der Schaltbedingung ausgeführt wird. Die explizite Umschaltung der Betriebsarten ermöglicht weiterhin eine weitgehend voneinander unabhängige Festlegung zum Einen der Schaltbedingungen für das Einfahren der Hochauftriebsklappen nach dem Start und zum Anderen der Schaltbedingungen für das Ausfahren der Hochauftriebsklappen während des Anflugs vor der Landung. Dies ist ein wesentlicher Unterschied zu der eingangs erörterten fahrtabhängigen Klappenschaltautomatik nach DE 25 31 799 C3, wo ein solches Verhalten nur durch manuelle Verstellung durch den Piloten während des Flugs erzielt werden kann. Während eines normalen Betriebsablaufs werden bei der vorliegenden Erfindung lediglich die Start- und Landekonfiguration über die Bedieneinheit 7 vorgegeben. Ergänzend gibt es den Umschalter 19 für den Übergang von der Start- in die Anflugbetriebsart. Dieser muss jedoch nur bei speziellen Betriebsabläufen betätigt werden. Das Gleiche gilt für die manuelle Ansteuerung des Klappensystems zum Einfahren der Klappen am Boden, sowie den Schalter 14, der das automatische Einfahren der Klappen 21, 22 am Boden unterbindet.

Die eigentliche Funktion der Hochauftriebsautomatik basiert auf einer begrenzten Anzahl von Flugzustandsparametern wovon die kalibrierte Fluggeschwindigkeit und ein Schätzwert für die momentane Masse des Flugzeugs die wichtigsten sind und greift damit das einfache Konzept einer fluggeschwindigkeitsabhängigen Steuerung der Hochauftriebsklappen 21, 22 auf. Die Festlegung der Konfigurationswechselgeschwindigkeiten des Flugzeugs erfolgt im Unterschied zu bekannten fahrtabhängigen Klappenschaltautomatiken US 2 350 751 oder DE 25 31 799 C3 aber in der Art, dass Geschwindigkeitsmargen zu den Betriebsgrenzgeschwindigkeiten erhalten bleiben. Die Erfindung leistet auch aus diesem Grund einen Beitrag zur Erhöhung der Flugsicherheit. Für die Optimierung der Schaltpunkte hinsichtlich besonderer Erfordernisse verschiedener Flugphasen ist ein weiterer Parameter erforderlich, der die entsprechenden Betriebsarten erlaubt zu unterscheiden. Für die Betriebsartenumschaltung ist im oben beschriebenen Ausführungsbeispiel ein Signal vorgesehen, das anzeigt, ob sich das Flugzeug in der Start bzw. der Durchstartphase befindet oder nicht. Des weiteren ist ein Höhensignal erforderlich, das auf eine feste Referenzhöhe bzw. Druckfläche bezogen ist.

Die genannten Flugzustandsparameter werden durch ein Bodensignal und ein Signal über die aktuelle Konfiguration der Hochauftriebsklappen 21, 22 ergänzt. Da alle genannten Signale für den Betrieb heutiger Großflugzeuge von fundamentaler Bedeutung sind, besitzen die entsprechenden Komponenten zur Erzeugung dieser Signale eine sehr hohe Betriebszuverlässigkeit. Damit unterscheidet sich die hier vorgeschlagene automatische Steuerung von Systemen, deren Funktion auf Flugplanungs- und Navigationsdaten basiert, wie bei US 4 042 197 oder EP 1 684 144 A1, da deren Signale in der Regel eine wesentlich geringere Verfügbarkeit aufweisen.

**Bezugszeichenliste**

| | |
|---|---|
| 1 | operationelles Geschwindigkeitsband |
| 1' | Überlappungsbereich |
| 2 | Geschwindigkeitspfad |
| 3 | Geschwindigkeitsmarge |
| 4 | Geschwindigkeitspfad |
| 5 | Differenzgeschwindigkeit |
| 5' | Differenzgeschwindigkeit |
| 5" | Geschwindigkeitsmarge |
| 6 | Geschwindigkeitspfad |
| 7 | Bedieneinheit |
| 8 | Bedienfeld Startkonfigurationswahl |
| 9 | Bedienfeld Landekonfigurationsvorwahl |
| 10 | Bedienfeld Bodensteuerfunktionen |
| 11 | Tasten Startkonfigurationswahl |
| 12 | Tasten Landekonfigurationsvorwahl |
| 13 | Taste Einfahren am Boden |
| 14 | Sperre Automatik |
| 15 | numerische Anzeigen |
| 16 | Konfigurationswechselgeschwindigkeit |
| 17 | Konfigurationswechselgeschwindigkeit |
| 17' | Konfigurationswechselgeschwindigkeit |
| 18 | Bedienfeld Umschaltung |
| 19 | Taste Direktumschaltung |
| 20 | Tragflügel |
| 21 | Vorderkantenklappe |
| 22 | Hinterkantenklappe |
| 23 | Antriebseinheiten |
| 24 | mechanische Verbindungen |
| 25 | Steuerverbindung |
| 26 | Klappensteuerungseinheit |
| 27 | Zusammenfassung von Funktionen zur Erfassung, Aufbereitung und Weiterleitung von Daten |
| 27' | weitere im Bordcomputer integrierte Funktionen |
| 28 | Bordcomputer |
| 29 | Abfrage Bedieneinheit und Flugzustandsparameter |
| 30 | Aufruf der Steuerungslogik |
| 31 | Abfrage ob Signal für das vollständige Einfahren der Hochauftriebsklappen am Boden vorliegt |
| 32 | Setzen des Konfigurationsvorgabewerts auf 0 |
| 33 | Verzweigungsstelle |
| 34 | Setzen des Konfigurationsvorgabewerts auf Wert für den Start |
| 35 | Aufruf der Geschwindigkeitsschaltlogik |
| 36 | Verzweigungsstelle |
| 37 | Setzen der maximalen Landekonfiguration auf Voreinstellwert |
| 38 | Setzen der maximalen Landekonfiguration auf Vorwahlwert |
| 39 | Verzweigungsstelle |
| 40 | Setzen des maximalen Landekonfigurationsvorgabewerts |
| 41 | Übermittlung der Stellkommandos und von Zustandsdaten |
| 51 | Aufruf der AUTOMATIKSPERRSUBROUTINE |
| 55 | Aufruf eines Prozessblocks zur Steuerung der Startkonfigurationswahl |
| 57 | Aufruf BETRIEBSARENUMSCHALTUNG |
| 59 | Aufruf eines Prozessblocks zur Steuerung der Landekonfigurationsvorwahl |
| 61 | Aufruf EINFAHREN DER HOCHAUFTRIEBSKLAPPEN AM BODEN |
| 71 | Verzweigungsstelle |
| 73 | Prozessblock |
| 75 | Verzweigungsstelle |
| 77 | Prozessblock |
| 91 | Verzweigungsstelle |
| 93 | Prozessblock |
| 95 | Verzweigungsstelle |
| 97 | Verzweigungsstelle |
| 99 | Verzweigungsstelle |
| 101 | Prozessblock |
| 111 | Verzweigungsstelle |
| 112 | Verzweigungsstelle |
| 113 | Verzweigungsstelle |

| | |
|---|---|
| 115 | Prozessblock |
| 117 | Verzweigungsstelle |
| 118 | Prozessblock |
| 119 | Verzweigungsstelle |
| 121 | Prozessblock |
| 123 | Verzweigungsstelle |
| 125 | Verzweigungsstelle |
| 127 | Prozessblock |
| 129 | Prozessblock |
| 131 | Verzweigungsstelle |
| 133 | Verzweigungsstelle |
| 135 | Prozessblock |
| 137 | Prozessblock |
| 141 | Prozessblock |
| 143 | Tabelle |
| 145 | Verzweigungsstelle |
| 147 | Verzweigungsstelle |
| 147a | Verzweigungsstelle |
| 147b | Verzweigungsstelle |
| 149 | Verzweigungsstelle |
| 149a | Verzweigungsstelle |
| 149b | Verzweigungsstelle |
| 151 | Prozessblock |
| 151 a | Prozessblock |
| 151b | Prozessblock |
| 153a | Verzweigungsstelle |
| 153b | Verzweigungsstelle |
| 153c | Verzweigungsstelle |
| 155a | Prozessblock |
| 155b | Prozessblock |
| 155c | Prozessblock |
| 157 | Verzweigungsstelle |
| 157a | Verzweigungsstelle |
| 157b | Verzweigungsstelle |
| 159 | Verzweigungsstelle |
| 159a | Verzweigungsstelle |
| 159b | Verzweigungsstelle |
| 161 | Prozessblock |
| 161 a | Prozessblock |
| 161 b | Prozessblock |

**Patentansprüche**

1. Einrichtung zur automatischen Steuerung eines Hochauftriebssystems eines Flugzeugs, aufweisend: Hochauftriebselemente (21, 22), die in eine eingefahrene und mehrere ausgefahrene Konfigurationen für Reiseflug, Start oder Landung einstellbar sind, eine Klappensteuerungseinheit (26), welche über eine Steuerverbindung (25) funktionswirksam mit einem Antriebssystem (23, 24) der Hochauftriebselemente (21, 22) verbunden ist, und eine an die Klappensteuerungseinheit (26) angeschlossene Bedieneinheit (7) zur Eingabe von die Einstellung der Hochauftriebselemente (21, 22) beeinflussenden Bedienkommandos, **dadurch gekennzeichnet, dass** die Klappensteuerungseinheit (26) zur Berechnung von den jeweiligen Konfigurationen der Hochauftriebselemente (21, 22) sowie den Richtungen der Konfigurationsänderung zugeordneten Schaltgeschwindigkeiten für die Verstellung der Hochauftriebselemente (21, 22) in Abhängigkeit von Flugzustandsdaten und/oder weiteren flugbetriebsrelevanten Daten vorgesehen ist, dass die Klappensteuerungseinheit (26) dazu vorgesehen ist, die den Konfigurationswechsel kommandierenden Befehle in Abhängigkeit von der Fluggeschwindigkeit automatisch zu erzeugen, und dass die Klappensteuerungseinheit (26) zusätzlich für eine automatische Umschaltung von Betriebsarten für Start bzw. Landeanflug vorgesehen ist.

2. Einrichtung nach Anspruch 1, **dadurch gekennzeichnet, dass** die Bedieneinheit (7) zur getrennten Eingabe der gewünschten maximalen Auftriebserhöhung entsprechenden vorgewählten Konfiguration jeweils für Start und Landeanflug und/oder zur getrennten Eingabe von mehreren, verschiedenen Konfigurationen jeweils für Start und Landung vorgesehen ist.

3. Einrichtung nach Anspruch 2, **dadurch gekennzeichnet, dass** die Bedieneinheit (7) getrennte Bedienfelder (8, 9) jeweils zur Startkonfigurationswahl und zur Landekonfigurationsvorwahl aufweist.

4. Einrichtung nach Anspruch 3, **dadurch gekennzeichnet, dass** in den Bedienfeldern (8, 9) zur Startkonfigurationswahl und zur Landekonfigurationsvorwahl jeweils einer jeden Konfiguration zugeordnete getrennte, einzelne Tasten (11, 12) vorgesehen sind.

5. Einrichtung nach Anspruch 2 oder 3, **dadurch gekennzeichnet, dass** die Bedieneinheit (7) den Bedienfeldern (8, 9) zur Startkonfigurationswahl und zur Landekonfigurationsvorwahl zugeordnete getrennte Sichtanzeigen (15) aufweist, welche zur Anzeige der jeweils vorgenommenen Konfigurationsvorwahl vorgesehen sind.

6. Einrichtung nach einem der vorherigen Ansprüche, **dadurch gekennzeichnet, dass** die Bedieneinheit (7) ein Bedienfeld (18) mit einem Betätigungselement (19) zur direkten manuellen Umschaltung zwischen einer Startbetriebsart und einer Anflugbetriebsart der automatischen Steuerung vorgesehen ist, wobei die Klappensteuerungseinheit (26) die Erzeugung der den Konfigurationswechsel kommandierenden Befehle entsprechend der manuell eingegebenen Betriebsart erzeugt.

7. Einrichtung nach einem der vorherigen Ansprüche, **dadurch gekennzeichnet, dass** die Bedieneinheit (7) ein weiteres Bedienfeld (10) für Bodensteuerfunktionen mit Bedienelementen (13, 14) zur manuellen Eingabe von Stellbefehlen für die Hochauftriebselemente (21, 22) am Boden umfasst.

8. Einrichtung nach Anspruch 7, **dadurch gekennzeichnet, dass** das Bedienfeld (10) für die Bodensteuerfunktionen ein Bedienfeld (13) zum Einfahren der Hochauftriebselemente (21, 22) am Boden aufweist, wobei die Klappensteuerungseinheit (26) dazu vorgesehen ist den eingegebenen Befehl nur bei Vorliegen eines entsprechenden Freigabesignals auszuführen, und/oder dass das Bedienfeld (10) für die Bodensteuerfunktionen ein Bedienelement (14) aufweist, das das automatische Einfahren der Hochauftriebselemente (21, 22) nach der Landung am Boden unterbindet.

9. Einrichtung nach Anspruch 8, **dadurch gekennzeichnet, dass** in dem für die Unterbindung der Automatikfunktion am Boden vorgesehenen Bedienelement (14) eine den Schaltzustand anzeigende optische Anzeigeeinrichtung vorgesehen ist.

10. Einrichtung nach einem der Ansprüche 1 bis 9, **dadurch gekennzeichnet, dass** die Klappensteuerungseinheit (26) dazu vorgesehen ist, einen Parameter zu setzen, bis zu dessen Aufhebung ein automatisches Einfahren der Hochauftriebselemente (21, 22) während des Startrollvorgangs und des Anfangssteigflugs bis zum Erreichen einer vordefinierten Höhe über dem Niveau der Startbahn nicht erfolgt.

11. Einrichtung nach einem der Ansprüche 1 bis 10, **dadurch gekennzeichnet, dass** die Klappensteuerungseinheit (26) zum Setzen eines Parameters "START' mit dem Erzeugen des Start- bzw. des Durchstartschubs vorgesehen ist, der anzeigt, dass die Klappensteuerungseinheit (26) in der Startbetriebsart arbeitet bzw. nach einem Wechsel aus der Anflugbetriebsart in der Startbetriebsart zu arbeiten beginnt.

12. Einrichtung nach Anspruch 11, **dadurch gekennzeichnet, dass** die Klappensteuerungseinheit (26) dazu vorgesehen ist, den Parameter "START" zurückzusetzen, wenn eine Geschwindigkeit überschritten wurde, die in der dann automatisch gültigen Anflugbetriebsart nicht zu einem unmittelbaren Ausfahren der Hochauftriebsklappen (21, 22) führt, und/oder dass die Klappensteuerungseinheit (26) dazu vorgesehen ist, den Parameter "START" zurückzusetzen, wenn ein geglättetes Signal für die Steigrate einen vordefinierten Schwellwert unterschreitet.

13. Einrichtung zur automatischen Steuerung eines Hochauftriebssystems eines Flugzeugs, aufweisend: Hochauftriebselemente (21, 22), die in eine eingefahrene und mehrere ausgefahrene Konfigurationen für Reiseflug, Start oder Landung einstellbar sind, eine Klappensteuerungseinheit (26), welche über eine Steuerverbindung (25) funktionswirksam mit einem Antriebssystem (23, 24) der Hochauftriebselemente (21, 22) verbunden ist, und eine an die Klappensteuerungseinheit (26) angeschlossene Bedieneinheit (7) zur Eingabe von die Einstellung der Hochauftriebselemente (21, 22) beeinflussenden Bedienkommandos, **dadurch gekennzeichnet,**

   • **dass** die Klappensteuerungseinheit (26) zur Berechnung von den jeweiligen Konfigurationen der Hochauftriebselemente (21, 22) sowie den Richtungen der Konfigurationsänderung zugeordneten Schaltgeschwindigkeiten für die Verstellung der Hochauftriebselemente (21, 22) in Abhängigkeit von Flugzustandsdaten und/oder weiterer flugbetriebsrelevanten Daten vorgesehen ist,
   • **dass** die Klappensteuerungseinheit (26) dazu vorgesehen ist, die den Konfigurationswechsel kommandierenden Befehle in Abhängigkeit von der Fluggeschwindigkeit automatisch zu erzeugen, und
   • **dass** die Klappensteuerungseinheit (26) dazu vorgesehen ist, die Hochauftriebselemente (21, 22) bei Fehlen einer über die Bedieneinheit (7) vorgenommenen Vorwahl automatisch bis in die üblicherweise für die Landung vorgesehene Konfiguration während des Anflugs zu bringen, wenn die entsprechenden geschwindigkeitsabhängigen Konfigurationswechsel- bzw. Schaltbedingungen erfüllt sind.

14. Einrichtung nach dem Anspruch 13, **dadurch gekennzeichnet, dass** die den jeweiligen Konfigurationen der Hochauftriebselemente (21, 22), den jeweiligen Betriebsarten und den Konfigurationsänderungsrichtungen in Abhängigkeit von verschiedenen Flugzeugmassen zugeordneten Schalt- bzw. Konfigurationswechselgeschwindigkeiten (16, 17, 17') in tabellarischer Form in der Klappensteuerungseinheit (26) abgespeichert sind.

15. Einrichtung nach Anspruch 14, **dadurch gekennzeichnet, dass** die Schalt- bzw. Konfigurationswechselgeschwindigkeiten zusätzlich nach der Flughöhe oder der Flugmachzahl differenziert gespeichert sind.

16. Einrichtung nach Anspruch 14 oder 15, **dadurch gekennzeichnet, dass** die Schalt- bzw. Konfigurationswechselgeschwindigkeiten weiterhin in Abhängigkeit verschiedener Fahrwerkspositionen gespeichert sind.

**17.** Einrichtung nach Anspruch 16, **dadurch gekennzeichnet, dass** die Schalt- bzw. Konfigurationswechselgeschwindigkeiten (16) unter Berücksichtigung von Geschwindigkeitsmargen (3) zu den maximalen operationellen Geschwindigkeiten in den jeweiligen Hochauftriebskonfigurationen festgelegt sind, und/oder dass die Schalt- bzw. Konfigurationswechselgeschwindigkeiten (17, 17') anhand von Geschwindigkeitsmargen (5, 5') bezüglich der maximalen operationellen Geschwindigkeiten sowie nach Maßgabe von als maximal anzusehenden Anfluggeschwindigkeiten in den jeweiligen Konfigurationen der Hochauftriebselemente (21, 22), definiert durch Geschwindigkeitsmargen (5") festgelegt sind.

**18.** Einrichtung nach einem der Ansprüche 13 bis 17, **dadurch gekennzeichnet, dass** die den jeweiligen Konfigurationen der Hochauftriebselemente (21, 22) zugeordneten Schalt- bzw. Konfigurationswechselgeschwindigkeiten (16, 17, 17') über betriebsartspezifische und nach den Konfigurationsänderungsrichtungen differenzierte Gewichtungsfaktoren unter Berücksichtigung von Geschwindigkeitsmargen bzw. Differenzgeschwindigkeiten (3, 5, 5', 5") bezüglich der nach momentanen Bedingungen vorliegenden und/oder für andere Hochauftriebskonfigurationen zu erwartenden operationellen Betriebsgrenzen berechnet werden und/oder dass die den jeweiligen Konfigurationen der Hochauftriebselemente (21, 22) zugeordneten Konfigurationswechselgeschwindigkeiten (16, 17, 17') über spezifische Differenzgeschwindigkeiten bezüglich der für die einzelnen Konfigurationen unter momentanen Flügzustands- und weiteren flugbetriebsrelevanten Daten zu erwartenden Betriebsgrenzen unter Berücksichtigung von Geschwindigkeitsmargen bzw. Differenzgeschwindigkeiten (3, 5, 5', 5") festgelegt sind.

**19.** Einrichtung nach Anspruch 14 oder 18, **dadurch gekennzeichnet, dass** die Gewichtungsfaktoren nach Anspruch 18, die Differenzgeschwindigkeiten bezüglich der Betriebsgrenzen nach Anspruch 18 oder die Konfigurationswechselgeschwindigkeiten nach Anspruch 14 für die Startbetriebsart (16) nach Maßgabe optimaler Steigleistungsmerkmale festgelegt sind und/oder dass die Differenzgeschwindigkeiten bezüglich der Betriebsgrenzen nach Anspruch 18 oder die Konfigurationswechselgeschwindigkeiten nach Anspruch 14 für die Anflugbetriebsart (17) nach Maßgabe eines minimalen Kraftstoffverbrauchs im Anflug festgelegt werden.

## Claims

**1.** An apparatus for automatically controlling a high-lift system of an aircraft, comprising: high-lift elements (21, 22) that can be set to a retracted and to several extended configurations for cruising flight, takeoff or landing, a flap control unit (26) that by way of a control connection (25) is connected, so as to be functionally effective, to a drive system (23, 24) of the high-lift elements (21, 22), and an operating unit (7), connected to the flap control unit (26), for entering operating instructions that influence the setting of the high-lift elements (21, 22), **characterized in that** the flap control unit (26) is provided for calculating, depending on flight state data and/or further data relevant for flight operation, switching speeds for the adjustment of the high-lift elements (21, 22), which switching speeds are associated with the respective configurations of the high-lift elements (21, 22) as well as the directions of the configuration change, **in that** the flap control unit (26) is provided to automatically generate the instructions instructing the configuration change depending on the flight speed, and **in that** the flap control unit (26) is additionally provided for an automatic switchover of operating modes for takeoff and landing approach, respectively.

**2.** The apparatus according to claim 1, **characterized in that** the operating unit (7) is provided for separate input, for takeoff and for landing approach, respectively, of the preselected configuration that corresponds to the desired maximum lift increase and/or for separate input, for takeoff and for landing, respectively, of several different configurations.

**3.** The apparatus according to claim 2, **characterized in that** the operating unit (7) comprises separate operator control panels (8, 9) for takeoff configuration selection and for landing configuration preselection, respectively.

**4.** The apparatus according to claim 3, **characterized in that** in the operator control panels (8, 9) for takeoff configuration selection and for landing configuration preselection in each case individual buttons (11, 12) are provided that are associated with each configuration.

**5.** The apparatus according to claim 2 or 3, **characterized in that** the operating unit (7) comprises separate visual displays (15), which are associated with the operator control panels (8, 9) for takeoff configuration selection and for landing configuration preselection and which are provided for displaying the respectively made configuration preselection.

**6.** The apparatus according to any of the preceding claims, **characterized in that** the operating unit (7) comprises an operator control panel (18) with an actuation element (19) for direct manual switchover between a takeoff operating mode and an approach mode of the automatic control system, wherein the flap control unit (26) generates the instructions instructing the change in configuration corresponding to the manually entered operating mode.

7. The apparatus according to any of the preceding claims, **characterized in that** the operating unit (7) comprises a further operator control panel (10) for ground control functions with operating elements (13, 14) for manually entering adjustment instructions for the high-lift elements (21, 22) on the ground.

8. The apparatus according to claim 7, **characterized in that** the operator control panel (10) for the ground control functions comprises an operator control panel (13) for retracting the high-lift elements (21, 22) on the ground, wherein the flap control unit (26) is provided to only carry out the instruction that has been entered if a corresponding release signal is present, and/or **in that** the operator control panel (10) for the ground control functions comprises an operating element (14) that prevents the automatic retraction of the high-lift elements (21, 22) after landing on the ground.

9. The apparatus according to claim 8, **characterized in that** a visual display device that indicates the switching state is provided in the operating element (14) that is provided for blocking the automatic function on the ground.

10. The apparatus according to any of claims 1 to 9, **characterized in that** the flap control unit (26) is provided for setting a parameter, until the cancellation of which no automatic retraction of the high-lift elements (21, 22) takes place during the takeoff taxiing procedure and the initial climb until a predefined altitude above the level of the runway has been attained.

11. The apparatus according to any of claims 1 to 10, **characterized in that** the flap control unit (26) is provided for setting a parameter "TAKEOFF" with the generation of the takeoff thrust or the go-around thrust, which parameter indicates that the flap control unit (26) operates in the takeoff operating mode or commences to operate after a change from the approach mode to the takeoff operating mode.

12. The apparatus according to claim 11, **characterized in that** the flap control unit (26) is provided for resetting the parameter "TAKEOFF" if a speed has been exceeded which in the approach mode that is automatically applicable at that time does not lead to immediate extension of the high-lift flaps (21, 22), and/or **in that** the flap control unit (26) is provided for resetting the parameter "TAKEOFF" if a smoothed signal for the climb rate falls below a predefined threshold value.

13. An apparatus for automatically controlling a high-lift system of an aircraft, comprising: high-lift elements (21, 22) that can be set to a retracted and to several extended configurations for cruising flight, takeoff or landing, a flap control unit (26) that by way of a control connection (25) is connected, so as to be functionally effective, to a drive system (23, 24) of the high-lift elements (21, 22), and an operating unit (7), connected to the flap control unit (26), for entering operating instructions that influence the setting of the high-lift elements (21, 22), **characterized**

   • **in that** the flap control unit (26) is provided for calculating, depending on flight state data and/or further data relevant for flight operation, switching speeds for the adjustment of the high-lift elements (21, 22), which switching speeds are associated with the respective configurations of the high-lift elements (21, 22) as well as the directions of the configuration change,
   • **in that** the flap control unit (26) is provided to automatically generate the instructions instructing the configuration change depending on the flight speed, and
   • **in that** the flap control unit (26) is provided for automatically moving, in the absence of a preselection made by way of the operating unit (7), the high-lift elements (21, 22) during the approach to the configuration usually provided for landing, if the corresponding speed-dependent configuration change or switching conditions are met.

14. The apparatus according to claim 13, **characterized in that** the switching change speeds or configuration change speeds (16, 17, 17') that are associated with the respective configurations of the high-lift elements (21, 22), the respective operating modes, and the configuration change directions depending on various aircraft weights are stored in tabular form in the flap control unit (26).

15. The apparatus according to claim 14, **characterized in that** the switching or configuration change speeds are additionally stored in a differentiated manner according to the flight altitude or the flight Mach number.

16. The apparatus according to claim 14 or 15, **characterized in that** the switching speeds or the configuration change speeds are, furthermore, stored dependent on different landing gear positions.

17. The apparatus according to claim 16, **characterized in that** the switching speeds or the configuration change speeds (16) have been set taking into account speed margins (3) relating to the maximum operational speeds in the respective high-lift configurations, and/or that the switching speeds or the configuration change speeds (17, 17') have been set on the basis of speed margins (5, 5') relating to the maximum operational speeds as well as according to approach speeds that have to be considered maximum approach speeds in the respective configurations of the high-lift elements (21, 22), defined by speed margins (5").

18. The apparatus according to any of claims 13 to 17, **characterized in that** the switching speeds or configuration change speeds (16, 17, 17') that are associated with the respective configurations of the high-lift elements (21, 22) are calculated by way weighting factors which are operating-mode specific and which are differentiated according to the directions of change of configurations, taking into account speed margins or differential speeds (3, 5, 5', 5") relating to the operational operating limits that are present according to the conditions at the time and/or that are to be expected in relation to other high-lift configurations, and/or **in that** the configuration change speeds (16, 17, 17') associated with the respective configurations of the high-lift elements (21, 22) have been set by way of specific differential speeds relating to the operating limits to be expected in relation to the individual configurations under flight state data at the time and further data relevant for flight operation, taking into account speed margins or differential speeds (3, 5, 5', 5").

19. The apparatus according to claim 14 or 18, **characterized in that** the weighting factors according to claim 18, the differential speeds relating to the operating limits according to claim 18, or the configuration change speeds according to claim 14 for the takeoff operating mode (16) have been set according to optimum climb performance characteristics and/or **in that** the differential speeds relating to the operating limits according to claim 18 or the configuration change speeds according to claim 14 for the approach operating mode (17) are determined according to minimum fuel consumption during the approach.

## Revendications

1. Dispositif pour la commande automatique d'un système de propulsion verticale d'un avion présentant : des éléments de propulsion verticale (21, 22) qui sont réglables dans une configuration rétractée et plusieurs configurations déployées pour le vol, le décollage ou l'atterrissage, une unité de commande de clapets (26) qui est reliée de manière fonctionnelle à un système d'entraînement (23, 24) des éléments de propulsion verticale (21, 22) par une connexion de commande (25) et une unité de commande (7) branchée sur l'unité de commande de clapets (26) pour l'entrée d'ordres de commande qui influent sur le réglage des éléments de propulsion verticale (21, 22), **caractérisé en ce que** l'unité de commande de clapets (26) est prévue pour le calcul des configurations respectives des éléments de propulsion verticale (21, 22) ainsi que de vitesses de commutation assignées aux directions du changement de configuration pour le réglage des éléments de propulsion verticale (21, 22) en fonction des données d'état de vol et/ou d'autres données pertinentes pour les opérations aériennes, que l'unité de commande de clapets (26) est prévue pour générer automatiquement des commandes qui commandent le changement de configuration en fonction de la vitesse de vol et que l'unité de commande de clapets (26) est prévue en plus pour une commutation automatique de modes de fonctionnement pour le décollage et/ou l'approche d'atterrissage.

2. Dispositif selon la revendication 1, **caractérisé en ce que** l'unité de commande (7) est prévue pour l'entrée séparée de configurations présélectionnées qui correspondent à l'augmentation maximale souhaitée de la propulsion respectivement pour le démarrage et l'approche d'atterrissage et/ou pour l'entrée séparée de plusieurs configurations différentes respectivement pour le décollage et l'atterrissage.

3. Dispositif selon la revendication 2, **caractérisé en ce que** l'unité de commande (7) présente des champs de commande séparés (8, 9) respectivement pour la sélection de la configuration de décollage et pour la présélection de la configuration d'atterrissage.

4. Dispositif selon la revendication 3, **caractérisé en ce que** des touches individuelles séparées (11, 12), assignées respectivement à chacune des configurations, sont prévues dans les champs de commande (8, 9) pour la sélection de la configuration de décollage et pour la présélection de la configuration d'atterrissage.

5. Dispositif selon la revendication 2 ou 3, **caractérisé en ce que** l'unité de commande (8) présente des affichages visuels séparés (15), assignés aux champs de commande (8, 9) pour la sélection de la configuration de décollage et pour la présélection de la configuration d'atterrissage, qui sont prévus pour l'affichage de la présélection de configuration respectivement effectuée.

6. Dispositif selon l'une des revendications précédentes, **caractérisé en ce que** l'unité de commande (7) présente un champ de commande (18) avec un élément d'actionnement (19) pour la commutation manuelle directe entre un mode de décollage et un mode d'approche de la commande automatique, l'unité de commande de clapets (16) générant la génération des ordres qui commandent le changement de configuration selon le mode de fonctionnement entré manuellement.

7. Dispositif selon l'une des revendications précédentes, **caractérisé en ce que** l'unité de commande (7) comprend un autre champ de commande (10) pour les fonctions de commande au sol avec des éléments de commande (13, 14) pour l'entrée manuelle de commandes de réglage pour les éléments de propulsion verticale (21, 22) au sol.

8. Dispositif selon la revendication 7, **caractérisé en ce que** le champ de commande (10) pour les fonctions de commande au sol présente un champ de commande (13) pour la rétraction des éléments de propulsion verticale (21, 22) au sol, l'unité de commande de clapets (26) étant prévue pour n'exécuter la commande entrée que lors de la présence d'un signal de libération correspondant et/ou que le champ de commande (10) pour les fonctions de commande au sol présente un élément de commande (14) qui empêche la rétraction automatique des éléments de propulsion verticale (21, 22) après l'atterrissage au sol.

9. Dispositif selon la revendication 8, **caractérisé en ce qu'**un dispositif d'affichage optique qui affiche l'état de commutation est prévu dans l'élément de commande (14) prévu pour l'empêchement de la fonction automatique au sol.

10. Dispositif selon l'une des revendications 1 à 9, **caractérisé en ce que** l'unité de commande de clapets (26) est prévue pour fixer un paramètre jusqu'à la suppression duquel une rétraction automatique des éléments de propulsion verticale (21, 22) n'a pas lieu pendant l'opération de roulage de décollage et le vol ascensionnel initial jusqu'à ce qu'une hauteur prédéfinie au-dessus du niveau de la piste de décollage soit atteinte.

11. Dispositif selon l'une des revendications 1 à 10, **caractérisé en ce que** l'unité de commande de clapets (26) est prévue pour fixer un paramètre "START" avec la génération de la poussée de décollage et/ou de remise des gaz qui indique que l'unité de commande de clapets (26) travaille dans le mode décollage ou commence à travailler dans le mode décollage après un changement à partir du mode d'approche.

12. Dispositif selon la revendication 11, **caractérisé en ce que** l'unité de commande de clapets (26) est prévue pour réinitialiser le paramètre "START" lorsqu'une vitesse a été dépassée qui ne conduit pas, dans le mode d'approche alors valide automatiquement, à un déploiement immédiat des clapets de propulsion verticale (21, 22) et/ou que l'unité de commande de clapets (26) est prévue pour réinitialiser le paramètre "START" lorsqu'un signal redressé pour la vitesse verticale n'atteint pas une valeur seuil prédéfinie.

13. Dispositif pour la commande automatique d'un système de propulsion verticale d'un avion présentant : des éléments de propulsion verticale (21, 22) qui sont réglables dans une configuration rétractée et plusieurs configurations déployées pour le vol, le décollage ou l'atterrissage, une unité de commande de clapets (26) qui est reliée de manière fonctionnelle à un système d'entraînement (23, 24) des éléments de propulsion verticale (21, 22) par une connexion de commande (25) et une unité de commande (7) branchée sur l'unité de commande de clapets (26) pour l'entrée d'ordres de commande qui influent sur le réglage des éléments de propulsion verticale (21, 22), **caractérisé en ce que**

• l'unité de commande de clapets (26) est prévue pour le calcul des configurations respectives des éléments de propulsion verticale (21, 22) ainsi que de vitesses de commutation assignées aux directions du changement de configuration pour le réglage des éléments de propulsion verticale (21, 22) en fonction des données d'état de vol et/ou d'autres données pertinentes pour les opérations aériennes,
• que l'unité de commande de clapets (26) est prévue pour générer automatiquement des commandes qui commandent le changement de configuration en fonction de la vitesse de vol et
• que l'unité de commande de clapets (26) est prévue pour amener automatiquement les éléments de propulsion verticale (21, 22) jusqu'à la configuration habituellement prévue pour l'atterrissage pendant l'approche en cas d'absence d'une présélection effectuée par l'unité de commande (7) lorsque les conditions correspondantes de changement de configuration ou de commutation qui dépendent de la vitesse sont remplies.

14. Dispositif selon la revendication 13, **caractérisé en ce que** les vitesses de commutation ou de changement de configuration (16, 17, 17') associées aux configurations respectives des éléments de propulsion verticale (21, 22), aux modes de fonctionnement respectifs et aux directions de changement de configuration respectives en fonction de différentes masses d'avion sont mémorisées sous forme de tableau dans l'unité de commande de clapets (26).

15. Dispositif selon la revendication 14, **caractérisé en**

**ce que** les vitesses de commutation ou de changement de configuration sont mémorisées de manière différenciée en plus selon la hauteur du vol ou le nombre de Mach du vol.

16. Dispositif selon la revendication 14 ou 15, **caractérisé en ce que** les vitesses de commutation ou de changement de configuration (16, 17, 17') sont mémorisées de plus en fonction de différentes positions de train d'atterrissage.

17. Dispositif selon la revendication 16, **caractérisé en ce que** les vitesses de commutation ou de changement de configuration (16, 17, 17') sont fixées en tenant compte de marges de vitesse (3) par rapport aux vitesses opérationnelles maximales dans les configurations de propulsion verticale respectives et/ou que les vitesses de commutation ou de changement de configuration (17, 17') sont fixées à l'aide de marges de vitesse (5, 5') par rapport aux vitesses opérationnelles maximales ainsi que selon des vitesses d'approche qui doivent être considérées comme maximales dans les configurations respectives des éléments de propulsion verticale (21, 22) en étant définies par des marges de vitesse (5").

18. Dispositif selon l'une des revendications 13 à 17, **caractérisé en ce que** les vitesses de commutation ou de changement de configuration (16, 17, 17') associées aux configurations respectives des éléments de propulsion verticale (21, 22) sont calculées par des facteurs de pondération spécifiques aux modes de fonctionnement et différenciés selon les directions de changement de configuration en tenant compte de marges de vitesse ou de vitesses différentielles (3, 5, 5', 5") par rapport aux limites opérationnelles existantes selon des conditions momentanées et/ou escomptées pour d'autres configurations de propulsion verticale et/ou que les vitesses de changement de configuration (16, 17, 17') associées aux configurations respectives des éléments de propulsion verticale (21, 22) sont fixées par des vitesses différentielles spécifiques par rapport aux limites opérationnelles escomptées pour les différentes configurations avec des données d'état de vol momentanées et d'autres données pertinentes pour le vol en tenant compte de marges de vitesse ou de vitesses différentielles (3, 5, 5', 5").

19. Dispositif selon la revendication 14 ou 18, **caractérisé en ce que** les facteurs de pondération selon la revendication 18, les vitesses différentielles par rapport aux limites opérationnelles selon la revendication 18 ou les vitesses de changement de configuration selon la revendication 14 pour le mode de décollage (16) sont fixés selon des caractéristiques optimales de puissance verticale et/ou que les vitesses différentielles par rapport aux limites opérationnelles selon la revendication 18 ou les vitesses de changement de configuration selon la revendication 14 pour le mode d'approche (17) sont fixées selon une consommation minimale de carburant en approche.

| Konfiguration | $\delta_S$ | $\delta_F$ | Flugphase | | |
|---|---|---|---|---|---|
| 0 | 0° | 0° | | Warteflug | Reiseflug |
| 1 | 15° | 0° | Start | | Warteflug |
| 2 | 20° | 20° | Start | Landung | Anflug |
| 3 | 20° | 30° | | Landung | |

Tabelle

Fig. 1

**Fig. 2**

**Fig. 3**

**Fig. 4**

**Fig. 5**

Fig. 6

Fig. 7

**Fig. 8**

**Fig. 9**

**Fig. 10**

**Fig. 11**

**Fig. 12**

START

51 — AUTOMATIKSPERRSUBROUTINE

55 — STEUERUNG
STARTKONFIGURATIONSWAHL

57 — BETRIEBSARTENUMSCHALTUNG

59 — STEUERUNG
LANDEKONFIGURATIONSVORWAHL

61 — EINFAHREN DER HOCHAUF-
TRIEBSKLAPPEN AM BODEN

RÜCKSPRUNG

**Fig. 13**

START

71 — HÖHE ÜBER
STARTBAHNNIVEAU
$< H_{noreconf}$? — NEIN

JA

75 — STARTKONFI-
GURATION
GEWÄHLT? — NEIN

JA

77 — AUTOMATIKSPERRE = 1

AUTOMATIKSPERRE = 0 — 73

RÜCKSPRUNG

**Fig. 14**

START

START DES
FLUGZEUGS ODER
DURCHSTARTEN
?

91

NEIN

JA

START = 1

93

NEIN

V ≥ VSSc

99

JA

95

START = 1
BEREITS
GESETZT ?

NEIN

JA

SIGNAL VOM
DRUCKSCHALTER
FÜR DIE UMSCHALTUNG IN
DIE ANFLUGBETRIEBS-
ART ?

NEIN

JA

97

START = 0

101

RÜCKSPRUNG

**Fig. 15**

**Fig. 16**

**Fig. 17**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2350751 A
- DE 2531799 C3
- US 4042197 A
- EP 1684144 A1
- US 2006049308 A